# EUROPEAN PATENT SPECIFICATION

(11) **EP 4 220 524 B1**
(45) Date of publication and mention of the grant of the patent: **12.06.2024**
(21) Application number: 22198245.7
(22) Date of filing: 28.09.2022
(51) Int. Cl.: G06Q 30/0201, G06Q 30/0202, G06Q 10/063, G06Q 10/0631, G06Q 30/0601, G06Q 50/28, G06Q 90/00

(54) **METHOD AND SYSTEM FOR ENABLING ASSORTMENT TOOL AND INTEGRATION OF APPLICATIONS FOR HYPER LOCALIZATION**
VERFAHREN UND SYSTEM ZUR ERMÖGLICHUNG EINES SORTIMENTWERKZEUGS UND INTEGRATION VON ANWENDUNGEN ZUR HYPERLOKALISIERUNG
PROCÉDÉ ET SYSTÈME PERMETTANT UN OUTIL D'ASSORTIMENT ET INTÉGRATION D'APPLICATIONS POUR HYPERLOCALISATION

(30) Priority: 28.01.2022 IN 202221004880
(43) Date of publication of application: 02.08.2023
(73) Proprietor: Tata Consultancy Services Limited, 400021 Mumbai, Maharashtra (IN)
(72) Inventor: THIRUNAVUKKARASU, Jeisobers, 600096 Chennai - Tamil Nadu (IN); RAO, Shilpa Yadukumar, 600096 Chennai - Tamil Nadu (IN); KARUNAKARAN, Arun Rasika, 600096 Chennai - Tamil Nadu (IN)
(74) Representative: Goddar, Heinz J.

(56) References cited:
- US-A1- 2021 042 771
- NUPUR AGGARWAL ET AL: "Hyper-local sustainable assortment planning", ARXIV.ORG, CORNELL UNIVERSITY LIBRARY, 201 OLIN LIBRARY CORNELL UNIVERSITY ITHACA, NY 14853, 27 July 2020 (2020-07-27), XP081727644,

## Description

### CROSS-REFERENCE TO RELATED APPLICATIONS AND PRIORITY

The present application claims priority to Indian application no. 202221004880, filed on 28 January 2022.

### TECHNICAL FIELD

The embodiments herein generally relate to assortment of items in retail stores and, more particularly, to a method and system for enabling assortment tool and integration of applications for hyper localization in retail value chain.

### BACKGROUND

In retail, sale of an item in a store depends on a huge number of local factors, which are referred to as sales drivers. For example, the local factors include socio economic factor of a store location, location and number of competitors around the store, weather conditions in the trade area, etc. These local factors influence individually as well as combination with others resulting a complex local factor network. Core minimum assortment (CMA) or standard assortment refers to offering a large section of items across all stores and those items are termed as standard items. Hyper localization refers to offering of items specific to location of a store in addition to CMA. Items that are influenced by varying customer preferences due to ethnicity or lifestyle or weather conditions and the like are noted as hyper localized items. Asian grocery items and European grocery items are a few examples for hyper localized items which are influenced by ethnicity. Those items which are not influenced by local factors may be noted as non-localized items or general items. Salt, sugar, and edible oils are few examples for general items or non- localized items.

When hyper localized items and general items are allocated to same carrier routes for delivery, it may create overstretched supply chains leading to lack of co-ordination across value chain. Hyper localized items and general items require separate mode of operations to improve overall efficiency of retail value chain. In general, the mode of operations associated with items need to vary based on level of localization of items. The challenge faced by the retailers are (a) identifying hyper localized items, and (b) measuring the level of localization for each item.

In typical retail scenario/networks, assortment tool provides list of items to be selected and number of units to be kept for a category for a predefined period based on historical performance of the items which were kept in the stores. Assortment tool provides list of items based on business rules reflecting business behavior of items such as dependency among items, etc. and relationship among items may arise due to many reasons such as varying customer preferences due to ethnicity or lifestyle or weather conditions etc. and combinations of those reasons. Business rules traditionally are defined by users based on user knowledge and experience. It is challenging to form business rules by considering these factors manually and it may lead to bias in outcomes. Additionally, assortment tool does not provide priority of display of items in the rack for the next season.

Successful hyper localization architecture involves a series of applications to carry out operations such as from procurement of localized items to other operations such as transport, logistic, storage, packaging, display, advertisement, sale of hyper localized items in brick-and-mortar stores and online. Each application needs to be linked and updated with information associated with hyper localization in terms of item, category, and store to optimize operations associated with hyper localization across value chain. It needs an integrated system architecture which will facilitate successful hyper localization implementation. Retailers face challenges in establishing an integrated system for hyper localization to optimize operations associated with hyper localization across value chain.

Challenge of any retailer is that they have limitations to keep all the items that are available in the market of a category in a store due to availability of limited space in the store. As per existing approaches, retailers used to take assortment decision based on historical performance of the items within a category and lost sales are not considered. Lost sales are those selling opportunities that retailer has lost because retailer did not carry a particular item in the past due to limited space.

Past studies on demand and assortment planning indicate that retail and CPG firms are starting to use predictive analytics, but they still experience high levels of out-of-stocks or mark-down rates. Such performance metrics highlight the need for hyper-localized planning which is a new powerful tool for extracting deep insights.

US patent application US2021/042771 is further prior art.

### SUMMARY

Embodiments of the present disclosure present technological improvements as solutions to one or more of the above-mentioned technical problems recognized by the inventors in conventional systems.

For example, in one embodiment, a method for enabling assortment tool and integration of applications for hyper localization in retail value chain is provided. The method includes obtaining (a) individual sales for each item among a plurality of items for a category among a plurality of categories at a zip code level from market data for a predefined period, and (b) a plurality of local factors associated with the category at the zip code level. Further the method includes positioning (a) the individual sales for each item in a columnar format to enable deriving relationship across the plurality of items within the category and (b) each of the plurality of local factors in the columnar format to enable relationship across the plurality of local factors. Further the method includes identifying (a) a set of sales patterns from linear combinations of individual sales of each of the plurality of items and (b) a set of local factor patterns from linear combinations of each of the plurality local factors by maximizing relationship between the set of sales patterns and the set of local factor patterns by applying a canonical analysis between the individual sales of each item in columnar format and the plurality of local factors in columnar format. Further the method includes determining (a) a plurality of notable sales patterns from among the plurality of sales patterns and a plurality of notable local factor patterns from among **the plurality of local factor patterns based on Wilks' lambda criterion provided by the** canonical analysis, and (b) a magnitude-of-importance of each notable sales pattern and a magnitude-of-importance of each notable local factor pattern based on variance contribution by corresponding notable sales pattern and notable local factor pattern provided by the canonical analysis. Furthermore, the method includes determining a) a set of notable items for each notable sales pattern, from among the plurality of items based on a significance parameter provided by the canonical analysis, and b) a magnitude -of-importance of each notable item among the set of notable items for each of the notable sales pattern, wherein the magnitude-of-importance of each notable item is measured using canonical loadings provided by the canonical analysis. Further the method includes identifying a set of localized complementary notable items and a set of localized competitive notable items from among the set of notable items for each of the notable sales pattern based on direction of the magnitude-of-importance, wherein (a) the set of localized complementary notable items for a corresponding notable sales pattern is identified from a positive magnitude-of-importance of the set of notable items and (b) the set of localized competitive notable items for the corresponding notable sales pattern is identified based on a negative magnitude-of-importance of the set of notable items. Thereafter the method includes performing automation of a plurality of rules for the assortment tool based on (a) the identified set of localized complementary notable items for a notable sales pattern which are labeled as group A and (b) the identified set of localized competitive items for the notable sales pattern which are labeled as group B, and wherein the assortment tool is enabled to ensure (i) if one or more items are selected from a group, then all items in the group are selected, and (ii) if all the items in group A are selected, then all the items in group B are deselected and if all the items in group A are deselected, then all the items in group B are selected. Further the method includes performing quantification of hyper localization of (a) each notable item among the notable items, (b) each category among the plurality of categories, (c) each store among a plurality of stores storing one or more of the plurality of items for one or more of the plurality of categories and (d) each store cluster among a plurality of store clusters for one or more of the plurality of categories formed by the plurality of stores. Furthermore, the method includes updating the central database with (a) the identified set of sales patterns and the measure of importance of each sales pattern and identified set of notable items under each sales pattern (b) the identified set of localized complementary notable items and the identified set of localized competitive notable items and (c) the quantified measure of hyper localization of each notable item, each category, each store and each store cluster. Thereafter, the method includes enabling integration of the plurality of applications that are linked with the central data base to optimize operations associated with hyper localization across value chain, wherein the plurality of applications pertains to procurement, transport, logistic, storage, packaging, brick and mortar stores, online sales, display, and advertisement.

In another aspect, a system for enabling assortment tool and integration of applications for hyper localization in retail value chain is provided. The system comprises a memory storing instructions; one or more Input/Output (I/O) interfaces; and one or more hardware processors coupled to the memory via the one or more I/O interfaces, wherein the one or more hardware processors are configured by the instructions to obtain (a) individual sales for each item among a plurality of items for a category among a plurality of categories at a zip code level from market data for a predefined period, and (b) a plurality of local factors associated with the category at the zip code level. Further the system is configured to position (a) the individual sales for each item in a columnar format to enable deriving relationship across the plurality of items within the category and (b) each of the plurality of local factors in the columnar format to enable relationship across the plurality of local factors. Further the system is configured to identify (a) a set of sales patterns from linear combinations of individual sales of each of the plurality of items and (b) a set of local factor patterns from linear combinations of each of the plurality local factors by maximizing relationship between the set of sales patterns and the set of local factor patterns by applying a canonical analysis between the individual sales of each item in columnar format and the plurality of local factors in columnar format. Further the system is configured to determine (a) a plurality of notable sales patterns from among the plurality of sales patterns and a plurality of notable local factor patterns from among the plurality of local factor **patterns based on Wilks' lambda criterion provided by the canonical anal**ysis, and (b) a magnitude-of-importance of each notable sales pattern and a magnitude-of-importance of each notable local factor pattern based on variance contribution by corresponding notable sales pattern and notable local factor pattern provided by the canonical analysis. Furthermore, the system is configured to determine a) a set of notable items for each notable sales pattern, from among the plurality of items based on a significance parameter provided by the canonical analysis, and b) a magnitude - of-importance of each notable item among the set of notable items for each of the notable sales pattern, wherein the magnitude-of-importance of each notable item is measured using canonical loadings provided by the canonical analysis. Further the system is configured to identify a set of localized complementary notable items and a set of localized competitive notable items from among the set of notable items for each of the notable sales pattern based on direction of the magnitude-of-importance, wherein (a) the set of localized complementary notable items for a corresponding notable sales pattern is identified from a positive magnitude-of-importance of the set of notable items and (b) the set of localized competitive notable items for the corresponding notable sales pattern is identified based on a negative magnitude-of-importance of the set of notable items. Thereafter the system is configured to perform automation of a plurality of rules for the assortment tool based on (a) the identified set of localized complementary notable items for a notable sales pattern which are labeled as group A and (b) the identified set of localized competitive items for the notable sales pattern which are labeled as group B, and wherein the assortment tool is enabled to ensure (i) if one or more items are selected from a group, then all items in the group are selected, and (ii) if all the items in group A are selected, then all the items in group B are deselected and if all the items in group A are deselected, then all the items in group B are selected. Further the system is configured to perform quantification of hyper localization of (a) each notable item among the notable items, (b) each category among the plurality of categories, (c) each store among a plurality of stores storing one or more of the plurality of items for one or more of the plurality of categories and (d) each store cluster among a plurality of store clusters for one or more of the plurality of categories formed by the plurality of stores. Furthermore, the system is configured to update the central database with (a) the identified set of sales patterns and the measure of importance of each sales pattern and identified set of notable items under each sales pattern (b) the identified set of localized complementary notable items and the identified set of localized competitive notable items and (c) the quantified measure of hyper localization of each notable item, each category, each store and each store cluster. Thereafter, the system is configured to enable integration of the plurality of applications that are linked with the central data base to optimize operations associated with hyper localization across value chain, wherein the plurality of applications pertains to procurement, transport, logistic, storage, packaging, brick and mortar stores, online sales, display, and advertisement.

In yet another aspect, there are provided one or more non-transitory machine-readable information storage mediums comprising one or more instructions, which when executed by one or more hardware processors causes a method for enabling assortment tool and integration of applications for hyper localization in retail value chain. The method includes obtaining (a) individual sales for each item among a plurality of items for a category among a plurality of categories at a zip code level from market data for a predefined period, and (b) a plurality of local factors associated with the category at the zip code level. Further the method includes positioning (a) the individual sales for each item in a columnar format to enable deriving relationship across the plurality of items within the category and (b) each of the plurality of local factors in the columnar format to enable relationship across the plurality of local factors. Further the method includes identifying (a) a set of sales patterns from linear combinations of individual sales of each of the plurality of items and (b) a set of local factor patterns from linear combinations of each of the plurality local factors by maximizing relationship between the set of sales patterns and the set of local factor patterns by applying a canonical analysis between the individual sales of each item in columnar format and the plurality of local factors in columnar format. Further the method includes determining (a) a plurality of notable sales patterns from among the plurality of sales patterns and a plurality of notable local factor patterns from among **the plurality of local factor patterns based on Wilks' lambda criterion provided by the** canonical analysis, and (b) a magnitude-of-importance of each notable sales pattern and a magnitude-of-importance of each notable local factor pattern based on variance contribution by corresponding notable sales pattern and notable local factor pattern provided by the canonical analysis. Furthermore, the method includes determining a) a set of notable items for each notable sales pattern, from among the plurality of items based on a significance parameter provided by the canonical analysis, and b) a magnitude -of-importance of each notable item among the set of notable items for each of the notable sales pattern, wherein the magnitude-of-importance of each notable item is measured using canonical loadings provided by the canonical analysis. Further the method includes identifying a set of localized complementary notable items and a set of localized competitive notable items from among the set of notable items for each of the notable sales pattern based on direction of the magnitude-of-importance, wherein (a) the set of localized complementary notable items for a corresponding notable sales pattern is identified from a positive magnitude-of-importance of the set of notable items and (b) the set of localized competitive notable items for the corresponding notable sales pattern is identified based on a negative magnitude-of-importance of the set of notable items. Thereafter the method includes performing automation of a plurality of rules for the assortment tool based on (a) the identified set of localized complementary notable items for a notable sales pattern which are labeled as group A and (b) the identified set of localized competitive items for the notable sales pattern which are labeled as group B, and wherein the assortment tool is enabled to ensure (i) if one or more items are selected from a group, then all items in the group are selected, and (ii) if all the items in group A are selected, then all the items in group B are deselected and if all the items in group A are deselected, then all the items in group B are selected. Further the method includes performing quantification of hyper localization of (a) each notable item among the notable items, (b) each category among the plurality of categories, (c) each store among a plurality of stores storing one or more of the plurality of items for one or more of the plurality of categories and (d) each store cluster among a plurality of store clusters for one or more of the plurality of categories formed by the plurality of stores. Furthermore, the method includes updating the central database with (a) the identified set of sales patterns and the measure of importance of each sales pattern and identified set of notable items under each sales pattern (b) the identified set of localized complementary notable items and the identified set of localized competitive notable items and (c) the quantified measure of hyper localization of each notable item, each category, each store and each store cluster. Thereafter, the method includes enabling integration of the plurality of applications that are linked with the central data base to optimize operations associated with hyper localization across value chain, wherein the plurality of applications pertains to procurement, transport, logistic, storage, packaging, brick and mortar stores, online sales, display, and advertisement.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for enabling assortment tool and integration of applications for hyper localization in retail value chain, in accordance with some embodiments of the present disclosure.
FIG. 1B illustrates an architectural overview of the system of FIG. 1, in accordance with some embodiments of the present disclosure.
FIGS. 2A through 2C (collectively referred as FIG. 2) is a flow diagram illustrating a method for enabling assortment tool and integration of applications for hyper localization in retail value chain, using the system of FIG. 1, in accordance with some embodiments of the present disclosure.
FIGS. 3A and 3B depict example user interface for manual mode of item selection for dependency rule of the assortment tool implemented by the system of FIG. 1 an assortment tool of the system of FIG. 1, in accordance with some embodiments of the present disclosure.
FIGS. 3C and 3D depict manual mode **of item selection for 'one way** complementary delist rule' of the assortment tool implemented by the system of FIG. 1, in accordance with some embodiments of the present disclosure.
FIG. 4 is graphical representation depicting variation of hyper localization between two categories, in accordance with some embodiments of the present disclosure.
FIG. 5 depicts an example planogram of hyper localized items generated based on the assortment tool, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Assorting mechanism used by existing approaches are unable to grade items, categories and stores based on influence of local factors in the trade area of a store. Moreover, existing approaches do not consider market potential of an item during assortment decisions and fail to consider lost sales, which is critical factor for assortment.

Embodiments of the present disclosure provide a method and system enabling assortment tool and integration of applications for hyper localization in retail value chain. Sales patterns and local factor patterns for the category are identified by maximizing relationship between the sales patterns and the local factor patterns using canonical analysis applied between the individual sales of each item in columnar format and the local factors in columnar format using canonical analysis. Notable sales **pattern and notable local factor patterns are obtained using a Wilks' lamda criterion** and notable items in each sales pattern are identified and classified into localized complementary and localized competitive items, which are used to generate rules for assortments of the items. Quantification of hyper localization of each notable item, each category, each store, and each store cluster is performed, and a central database is updated, enabling operations associated with hyper localization across value chain through a plurality of applications that are linked with the central data base.

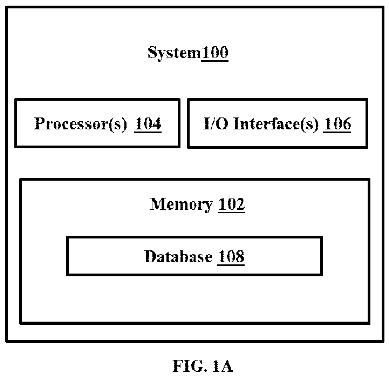

Referring now to the drawings, and more particularly to FIGS. 1A through 5, where similar reference characters denote corresponding features consistently throughout the figures, there are shown preferred embodiments and these embodiments are described in the context of the following exemplary system and/or method.

FIG. 1A is a functional block diagram of a system, for enabling assortment tool and integration of applications for hyper localization in retail value chain, in accordance with some embodiments of the present disclosure. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

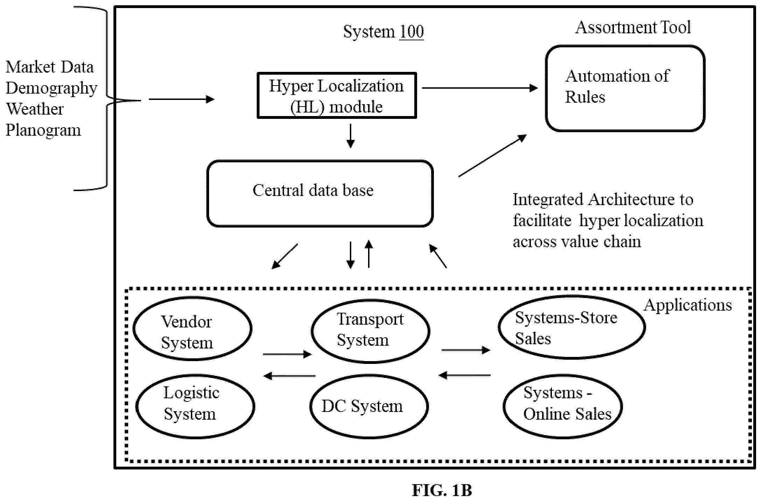

The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices to collect market data, sales drivers, and other information, as depicted in system architectural diagram of FIG. 1B.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

Further, the memory 102 includes a database 108 that stores acquired market data, individual sales per item and local factors at zip code level acquired from the market data, and the like. Further, the memory 102 includes modules such as Hyper localization (HL) module comprising canonical analysis module (not shown), an assortment tool for automation of rules for assortment, and the like, as depicted in system architectural diagram of FIG. 1B.

Further, the memory 102 may comprise information pertaining to input(s)/output(s) of each step performed by the processor(s) 104 of the system100 and methods of the present disclosure. In an embodiment, the system 100 is coupled to a central data base as depicted in FIG. 1B that may be external to the system 100 and coupled to the system via the I/O interface 106. In an embodiment, the I/O interface (s) 106 can include one or more ports for connecting a number of applications with central database in which the applications may perform operations such as procurement, transport, logistic, storage, packaging, sales in brick-and-mortar stores, sales in online, display of items, advertisement, and the like and the central database may act as central repository of information associated with items, category, stores and the like.

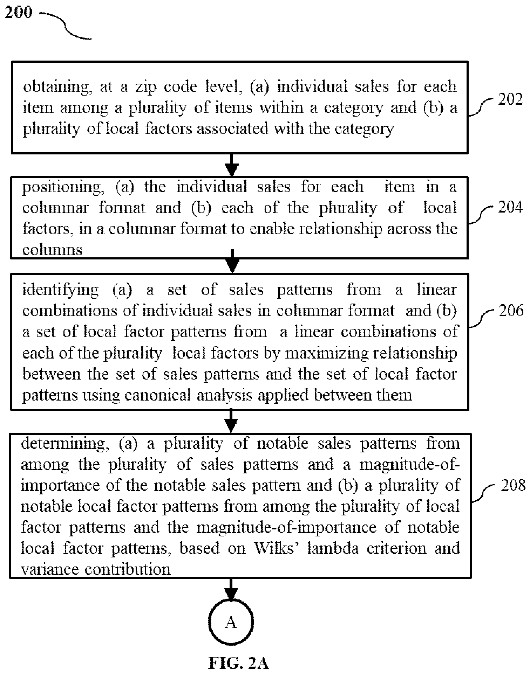

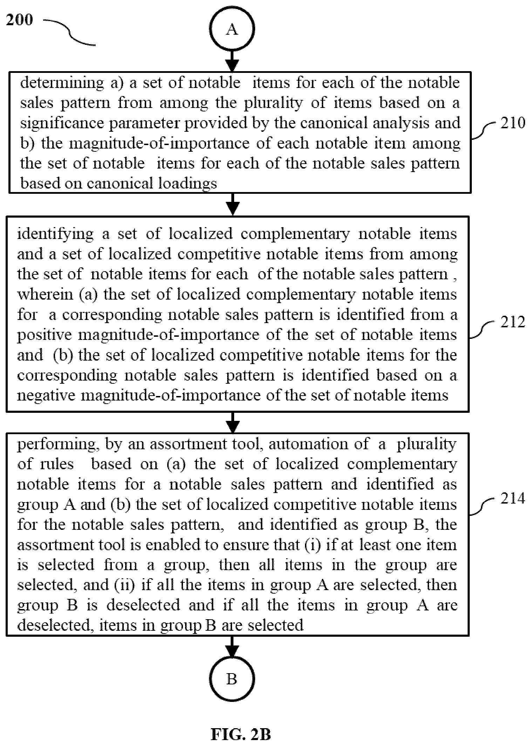

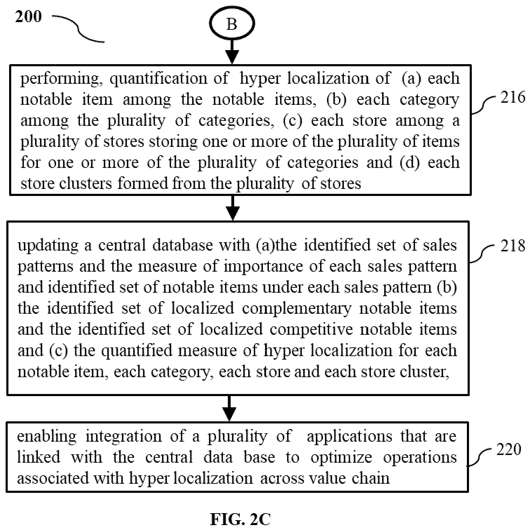

Functions of the components of the system 100 are explained in conjunction with system architecture of FI. 1B, flow diagram of FIG. 2, and FIGS. 3 through 5.

FIG. 1B illustrates an architectural overview of the system of FIG. 1, in accordance with some embodiments of the present disclosure and is explained in conjunction with steps if flow diagram of FIG. 2

FIGS. 2A through 2C (collectively referred as FIG. 2) is a flow diagram illustrating a method 200 for enabling assortment tool and integration of applications for hyper localization in retail value chain, using the system of FIG. 1, in accordance with some embodiments of the present disclosure. In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 200, at step 202 of the method 200, the HL module executed by the one or more hardware processors 104 obtains (a) individual sales for each item among a plurality of items for a category among a plurality of categories at a zip code level from market data provided by third party vendors for a predefined period, and (b) a plurality of local factors associated with the category at the zip code level, as depicted in FIG. 1B. As the sales are considered from market data instead of point of sales (POS) system, it enables to consider the lost sales happened in **the past for the retailer. In an instance, for 'kidswear'** category, and for a general merchandise retailer, he might not concentrate on kids apparel and carry limited variety. As market sales data is used it indicates potentiality of location with respect to kids wear. The market data captures the information on how much kids apparel sell in the location which includes the sales from the apparel competitors who carry more varieties and the sales from the general merchandise retailer.

Even though a zip code information is by the method disclosed to represent an area being covered, it can be understood that the level or area to be covered for market data collections can be defined in accordance with requirements of end user based on the assortment objective. The level or area to be covered for market data collections may be modified such as store trade area level for a predefined period and the like.

Once the market data is obtained, at step 204 of the method 200, the HL module executed by the one or more hardware processors 104 positions (a) the individual sales for each item in a columnar format to enable deriving relationship across the plurality of items within the category, and (b) each of the plurality of local factors in the columnar format to enable relationship across the plurality of local factors. Table 1 and table 2 below provide example of individual sales data and local **factors capturing various sales driver at the zip code level for category 'mobile' with** items specifying the different type of mobiles and their individual sales for a specified predefined period. For explanation purpose, under Table 1, six items and two periods for each zip code are considered with hypothetical sales information and in real condition, the number of items under a category may reach to 100 or more and the number of periods for each zip code may vary based on time interval considered for sales calculation.

**Table 1**

| Mobile Sales (Y) | | | | | | |
|---|---|---|---|---|---|---|
| | | | | | | |

| Item | Item 1 | Item 2 | Item 3 | Item 4 | Item 5 | Item 6 |
|---|---|---|---|---|---|---|
| | High end mobile 1 | High end mobile 2 | High end mobile 3 | Low end mobile 1 | Low end mobile 2 | Low end mobile 3 |
| zipcode_1_peri od n | 1000 | 400 | 970 | 250 | 500 | 370 |
| zipcode_1_peri od 2 | 920 | 320 | 890 | 410 | 420 | 290 |
| zipcode_2_peri od 1 | 1030 | 220 | 1030 | 370 | 530 | 210 |
| zipcode_2_peri od 2 | 880 | 280 | 820 | 400 | 620 | 220 |
| zipcode_3_peri od 1 | 960 | 360 | 1030 | 330 | 460 | 430 |
| zipcode_3_peri od 2 | 550 | 800 | 670 | 650 | 200 | 770 |
| zipcode_4_peri od 1 | 410 | 720 | 590 | 810 | 120 | 690 |
| zipcode_4_peri od 2 | 670 | 830 | 420 | 770 | 210 | 830 |
| zipcode_5_peri od 1 | 300 | 680 | 520 | 800 | 320 | 620 |
| | | | | | | |
| zip_code_ _period (,00,000) | 630 | 760 | 320 | 730 | 160 | 830 |

The columnar format having items in column is constructed for two purposes: (1) to relate sale of each item with sale of other items column wise and extract localized complementary items and localized competitive items which are influenced by local factors and (2) To identify items that are influenced by local factors in different magnitude and to categorize those items as first set, second set and third set based on magnitude of hyper localization respectively. It enables to identify localized complementary items that favor sales of each other with respect to local factor and need to be kept nearby position in the rack based on the location of the store. It also enables to identify localized competitive items within a category that are competitive to each other based on the location of the store. The hidden relationship between items is captured by arranging in column format to apply mining techniques. And (3) to establish hidden relationship between sales information and local factor information by mapping both as specified in step 206.

For explanation purpose, under Table 2, six local factors and two periods for each zip code are considered with hypothetical local factor information and in real condition, the number of local factors under a category may reach to 500 or more. It is to be noted that each row of both Table 1 and Table 2 is ensured to have same reference with respect to zip code and time interval to relate both tables as explained in the later sections. Thus, both tables have same number of rows and varying number of columns depending on number of items within the category considered in Table1 and number of local factors considered in Table2.

**Table 2**

| Local factors (Socio Economic factor - X) | | | | | | |
|---|---|---|---|---|---|---|
| | No of IT | No of female | No of young | No of male | No of old | No of unem p |
| zipcode_1_period d n | 965 | 815 | 935 | 365 | 215 | 335 |
| zipcode_1_perio d2 | 885 | 975 | 855 | 285 | 375 | 255 |
| zipcode_2_perio d 1 | 995 | 935 | 995 | 395 | 335 | 395 |
| zipcode_2_perio d 2 | 845 | 725 | 785 | 245 | 365 | 185 |
| zipcode _3_perio d 1 | 925 | 710 | 900 | 325 | 295 | 395 |
| zipcode _3_perio d 2 | 665 | 515 | 635 | 765 | 615 | 735 |
| zipcode_4_perio d 1 | 585 | 675 | 555 | 685 | 775 | 655 |
| zipcode_4_perio d 2 | 695 | 635 | 695 | 795 | 800 | 795 |
| zipcode_5_perio d 1 | 545 | 665 | 485 | 645 | 765 | 585 |
| | | | | | | |
| zipcode_5_perio d 2 | 625 | 595 | 695 | 725 | 900 | 810 |

The local factors specific to a category are those factors which are captured at zip code level and influence sales of the items of the category at the zip code level. Few examples of local factors are demographic and lifestyle data, weather, etc. collected from third party vendors. Demography includes population of different segments, ethnicity, wealth, and lifestyle, etc., Local factors specific to a category for a predefined period is processed to bring in a suitable format to map with sales of the items within a category. Here columns are formed by local factors, including demographics, weather, etc. and rows are formed by zip codes and cells are formed by values of local factors. Above format having local factors in column is constructed for two purposes (1) to relate each local factor with other local factors. One or more local factors influence the sales of an item when they are considered individually as compared to combined which is called as interaction effect across many local factors. The hidden relationship between local factors is captured by arranging in column format to apply mining techniques. In one example, wherein a high end mobile sales is more influenced by combination of gender, occupation and income as compared to individually such as gender alone or occupation alone and the combined effect is explored by arranging local factors in columnar format, and (2) as a pre step to establish hidden relationship between set of sales information (as per previous section) and set of local factor information by mapping both. Each row of Table 2 is ensured to have same reference with respect to zip code and time interval of Table 1 to identify patterns by relating both tables as explained in next section.

Thus, at step 206 of the method 200, the HL module executed by the one or more hardware processors 104 identifies (a) a set of sales patterns from linear combinations of individual sales, of each of the plurality of items and (b) a set of local factor patterns from linear combinations of each of the plurality local factors. This is done by maximizing relationship between the set of sales patterns and the set of local factor patterns by applying canonical analysis between the individual sales of each item in columnar format and the plurality of local factors in columnar format.

**Table 3 Table 4**

| Canonical Variate Y1 | Canonical Variate Y2 | **Canonical Variate X1** | **Canonical Variate X2** |
|---|---|---|---|
| 2268 | 1354 | **2536** | **1215** |
| 2092 | 1306 | **2544** | **1215** |
| 2351 | 1207 | **2758** | **1425** |
| 2142 | 1198 | **2206** | **1071** |
| 2270 | 1450 | **2387.5** | **1277.5** |
| 1623 | 2104 | **1996** | **2065** |
| 1393 | 2044 | **2004** | **2065** |
| 1587 | 2225 | **2231** | **2333.5** |
| 1380 | 1922 | **1882** | **1945** |
| | | | |
| 1405 | 2101 | **2132.5** | **2361.5** |

Canonical analysis attempts to mine all possible linear combinations of sale of items and provides top linear combinations in the form of canonical variables **and noted as `Canonical variable Y'** (Table 3) and noted as pattern Y1, pattern Y2, **pattern Y3,...pattern Y_m, and in common it is noted as** 'set of sales **pattern Y'.** In the same way, it attempts to mine all possible linear combination of local factors and provides top combinations in the form of canoni**cal variable and noted as 'pattern X1**, **pattern X2, pattern X3,...pattern X_n, and in common it is noted as** 'set of local factor **pattern X'** (table 4). **'Pattern Y' and 'Pattern X' are identified by canonical analysis such** that the relationship between pattern Y and pattern X is maximum..

Table 5 highlights the maximum hidden relationship between sales pattern and local factor pattern in the form of correlation value,

**Table 5**

| | |
|---|---|
| Correlation between Canonical Variate Y1 and Canonical Variate X1= | 0.86 |
| Correlation between Canonical Variate Y1 and Canonical Variate X2= | -0.89 |
| Correlation between Canonical Variate Y1 and Canonical Variate X2= | -0.75 |
| Correlation between Canonical Variate Y2 and Canonical Variate X2= | 0.96 |

Referring back to step 208 of the method 200, the HL module executed by the one or more hardware processors 104 determines (a) a plurality of notable sales patterns from among the plurality of sales patterns and a plurality of notable local factor **patterns from among the plurality of local factor patterns based on Wilks' lambda** criterion provided by the canonical analysis, and (b) a magnitude-of-importance of the notable sales pattern and the magnitude-of-importance of notable local factor patterns based on variance contribution by corresponding notable sales pattern and notable local factor pattern respectively provided by canonical analysis.

A sales pattern is formed during canonical analysis based on hidden relationship that exists between items of a sales pattern. The relationship may be formed based on many reasons such as varying customer preferences due to ethnicity or lifestyle or weather conditions etc. and combinations of those reasons explored by canonical analysis. For example, in case of grocery category, Asian groceries may come under one sales pattern due to ethnicity and those factors that influence the Asian groceries **may form `a** notable local **factor pattern'.** By similar way, European groceries may be influenced by ethnicity and a set of local factors, and they may form another notable sales pattern and notable local factor pattern. In case of mobile category high end mobiles may come under one group due to lifestyle, and in case of processed foods, packaged fruit juices may come under one group due to weather in the locality.

HL Pattern contribution - Among the selected sales patterns and factor patterns, their magnitude-of-importance-of hyper localization is measured from **'variance contribution' provided by canonical analysis. In analytical term, variance** contribution indicates the amount of variation of sales pattern that is explained by factor pattern. The magnitude-of- importance of a local factor pattern indicates the amount of localization that is captured by the local factor pattern.

The central database is updated with the set of notable sales patterns and corresponding magnitude of importance of hyper localization values for each category to enable and integrate operations associated with hyper localization across value chain

At step 210 of the method 200, the HL module executed by the one or more hardware processors 104 determines a) a set of notable items for each of the notable sales pattern, from among the plurality of items based on a significance parameter provided by the canonical analysis, and b) the magnitude-of-importance of each notable item among the set of notable items for each of the notable sales pattern. The magnitude-of-importance is measured using canonical loadings provided by the canonical analysis, which measures correlation between the one or more notable items and a corresponding notable sales pattern from among the notable sales patterns. It is known for those skilled in the art that the significance parameter provided by canonical analysis indicates that the loading of an item is statistically significant or not.

Thus, at step 210, those items, also referred as HL items, that need hyper localization among the entire plurality of items of a category are identified by two stages such as (1) identification of notable sales patterns, and (2) identification of notable items within the identified notable sales patterns. Those items which have highest localization within a category are captured in top sales pattern having highest magnitude-of-importance and the notable items present in top sales pattern is noted as first set of items representing top localized items within the category. Those items which have next level of localization within a category are captured in second top sales pattern and are noted as second set of items representing next level of localized items within the category. Each notable sales pattern produces **one 'notable set of localized items' and as there are many notable sales patterns, many 'notable set of localized items' are identified. Each notable local factor pattern produces 'a set of notable localized factors' and as there are** many notable local patterns, many sets of notable localized factors are identified.

The central database is updated with the set of notable items under each notable sales patten and corresponding magnitude of importance of hyper localization values for each category to enable and integrate operations associated with hyper localization across the value chain.

At step 212 of the method 200, the HL module executed by the one or more hardware processors 104 identifies a set of localized complementary notable items and a set of localized competitive notable items from among the set of notable items for each of the notable sales pattern based on direction of the magnitude-of-importance. Further, (a) the set of localized complementary notable items for a corresponding notable sales pattern is identified from a positive magnitude-of-importance of the set of notable items and (b) the set of localized competitive notable items for the corresponding notable sales pattern is identified based on a negative magnitude-of-importance of the set of notable items. Localized complementary notable items are referred as those items that exhibit dependency behavior among themselves within a category at zip code level due to varying customer preferences due to ethnicity or lifestyle or weather conditions etc., and combinations of those reasons. Localized competitive notable items are referred as those items that exhibit competitive behavior among themselves within a category at zip code level due to varying customer preferences due to ethnicity or lifestyle or weather conditions etc. and combinations of those reasons. It is to be understood that the complementary effect or competitive effect that exist across items within a category that are specific to an ethnic group or a type of lifestyle or a type of weather condition and the like is established through columnar format of items and factors by canonical analysis, and it is established under each notable sales pattern separately. Further, the central data base is updated with the identified set of localized complementary notable items, the identified set of localized competitive notable items and their magnitude enabling operations associated with the identified set of localized complementary notable items and the identified set of localized competitive notable items across value chain through associated applications that are linked with central database.

At step 214, the assortment tool executed by the one or more hardware processors, performs automation of a plurality of rules based on (a) the set of localized complementary notable items for a notable sales pattern and which is labeled as group A, and (b) the set of localized competitive items for the notable sales pattern, which is labeled as group B. The assortment tool is enabled to ensure that (i) if one or more items are selected from a group, then all items in the group are selected, and (ii) if all the items in group A are selected, then all items in group B is deselected and if all the items in group A are deselected, all the items in group B are selected.

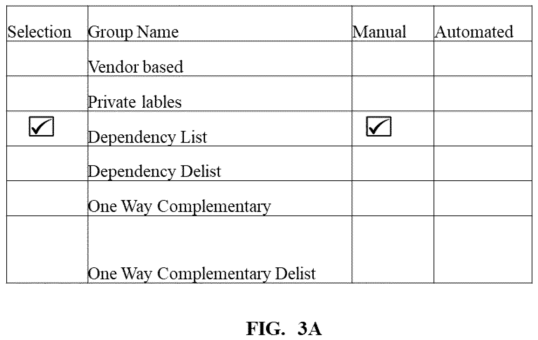

FIG. 3A depicts example with user Interface for traditional method of manual mode of item selection for dependency rule of an assortment tool of the system of FIG. 1, in accordance with some embodiments of the present disclosure.

As per dependency list rules of assortment tool, user needs to create **'dependency list' by** selecting the list of items from the entire item of category based on his knowledge and experience manually. Dependency list is defined as the list of items in which sale of each item is complementing other items within a category. In one **instance, Asian/Chinese groceries such as Noodles, Soy sauce, vinegar' may** be selected manually based on his experience and knowledge,

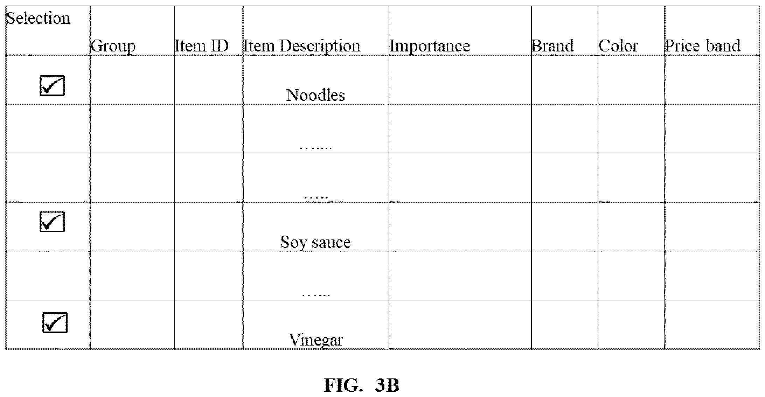

FIG. 3B depicts traditional method of manual mode of selection for dependency rule of assortment tool. As per dependency list rule of assortment performed **'In a group, if one or more** items are selected, then select all the items in the group. If all the items cannot be selected, then select as many items **as possible'**

When user selects the automatic mode, the dependency list for the selected category is retrieved from central database and displayed in the screen for user approval. **Many 'dependency list' may be formed by considering each sales pattern.** User may have better insight as he may be able to view importance of each sales pattern (not shown in Fig) from corresponding magnitude-of-importance of the sales pattern and direction and importance of each item from corresponding magnitude of importance and which may lead to faster approval by user. **In an instance, 'Asian groceries' may form one pattern with localized complementary items which could form** dependency list. **'European groceries' may form another pattern with localized** complementary items which may form dependency list.

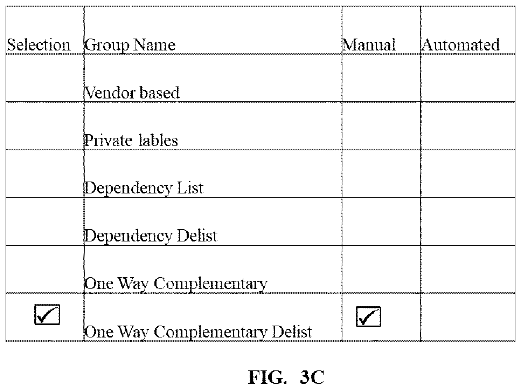

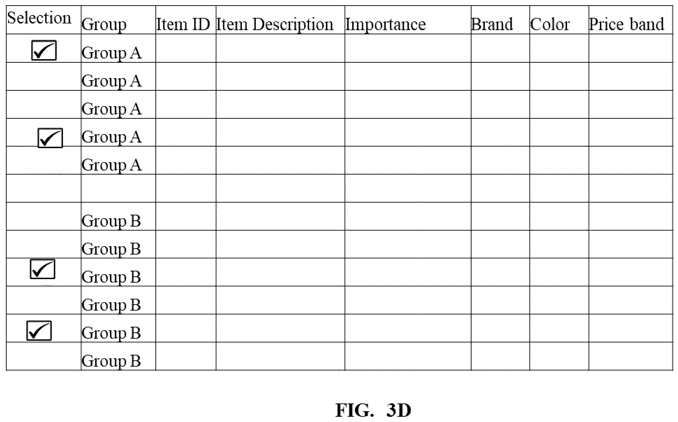

FIG. 3C depicts m**anual mode of item selection for 'one way** complementary delist rule of assortment tool. **As per 'One Way Complimentary de-list'** rule, user needs to select the list of items from the entire item of category and to form two groups of items namely group A and group B based on his knowledge and experience manually. FIG. 3D depicts m**anual mode of item selection for 'one way complementary delist' rule of assortment tool. As per 'One Way Complimentary de-list' rule,** if all the items in group A are selected, then deselect group B. If all the items in group A are not selected, items in group B could be selected.

Automated mode: **When user selects automatic mode, the 'One Way** Complimentary de-list' **for the selected category is retrieved from** central database and displayed in the screen for user approval. 'One-way complimentary de-list' is formed from one sales pattern having items with opposite direction of magnitude in which items under one direction form a group and items under opposite direction will form another group. Many such lists may be formed by considering each sales pattern. User may have better insight as he may be able to view importance of each sales pattern (not shown in Fig) from corresponding magnitude-of-importance of the sales pattern and direction and importance of each item from corresponding magnitude of importance and which may lead to faster approval by user.

Referring table 6 to table 9 in an instance, (a) high end mobile sales may be influenced by a set of factors associated with lifestyle and they may form a notable sales pattern (table 6), and (b) low end mobile sales may be influenced by a set of lifestyle factors, and they may form another notable sales pattern (table 7). High end mobile sales and low end mobile sales may behave in opposite direction and may form another notable sales pattern (table 8 and 9).

**Table 6**

| 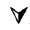 Dependency list 1 | | |
|---|---|---|
| Importance - 45% | | |
| List of items | Magnitude | User approved |
| High end mobile 1 | 0.98 | ● |
| High end mobile 2 | 0.91 | ● |
| High end mobile 3 | 0.75 | ● |

**Table 7**

| 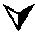 Dependency list 2 | | |
|---|---|---|
| Importance - 26% | | |
| List of items | Magnitude | User approved |
| Low end mobile 1 | 0.92 | ● |
| Low end mobile 2 | 0.81 | ● |
| Low end mobile 3 | 0.79 | ● |

**Table 8**

| One way complementary delist 1 QI | | | |
|---|---|---|---|
| Importance - 36% | | | |
| List of items | Group | Magnitude | User approval |
| High end mobile 1 ◆ | A | +0.98 | ● |
| High end mobile 2 ◆ | A | +0.91 | ● |
| Low end mobile 1 ■ | B | - 0.72 | ● |
| Low end mobile 2 ■ | B | -0.69 | ● |

**Table 9**

| One way complementary delist 2 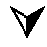 | | | |
|---|---|---|---|
| Importance - 24% | | | |
| List of items | Group | Magnitude | User approval |
| Low end mobile 1 ■ | A | +0.92 | ● |
| Low end mobile 2 ■ | A | +0.81 | ● |
| High end mobile 1 ◆ | B | - 0.82 | ● |
| High end mobile 2 ◆ | B | -0.79 | ● |

At step 216, the HL module executed by the one or more hardware processors performs quantification of hyper localization of (a) each notable item among the notable items, (b) each category among the plurality of categories, (c) each store among a plurality of stores storing one or more of the plurality of items for one or more of the plurality of categories, and (d) each store cluster among a plurality of store clusters for one or more of the plurality of categories formed by the plurality of stores.

Quantification of hyper localization of a notable item for a category: This is done by considering the magnitude-of-importance of each of the notable item and the magnitude-of-importance of the corresponding notable sales pattern. Quantification of hyper localization of an item for a category = Sum(magnitude - of - importance of 'notable sales pattern_i') * (magnitude - of - importance of notable item within the 'notable sales pattern_i') **Here 'i' varies from 1 to n in which n is number of notable sales patterns which is** decided by wilks lambda criterion. Thus, hyper localization of an item is calculated using equation (1). The quantified measure of hyper localization of an item may have values ranging from 0 to 1 in which value of 0 indicates that the item is not localized and value of 1 indicates that the item is localized to the maximum extent. Each notable item in a category may be graded based on its hyper localization value such as very high, high, medium, and low. The quantification and grading of each localized items are utilized for different retail applications within the scope of present disclosure. In one instance, each item, its hyper localization measure, and grade of hyper localization is updated in central database.

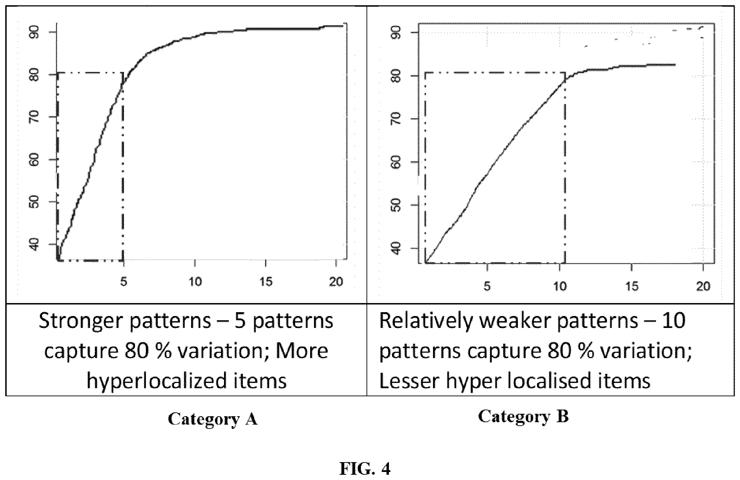

Quantification of hyper localization for each category - Each category is quantified by summing the magnitude-of-importance of all notable sales patterns. The sum of magnitude-of-importance of all notable sales patterns may have values ranging from 0 to 1 in which value of 0 indicates that the category has items which are not localized and value of 1 indicates that the category has items which are localized to the maximum extent. In an example, items under ethnic wear in (FIG. 4, Category A) may have stronger patterns as they are more influenced by local factors as compared to essential items. The other categories with stronger patterns may be categories with luxury in nature such as high-end watches, high end mobiles, cosmetics, etc. In contrast items under grocery category (FIG. 4, Category B) which comes under essential category, may have relatively weaker patterns as the items such as salt, sugar, edible oils, etc. are less influenced by local factors. The central database is updated with the categories and their hyper localization values to enable operations associated with hyper localization across value chain.

Quantification of hyper localization for each store for each category: Each store is quantified for hyper localization by considering notable local factor patterns and calculating weighted multivariate distance between stores. Weighted multivariate distance for factor patterns of a category is calculated between stores in which each notable local factor pattern act as a variable and combination of all notable local factor patterns form a multivariate and magnitude-of-importance of each factor pattern is taken as weight for multivariate distance estimation. Weighted multivariate distance between centroid of population and notable local factor patterns of a store is calculated and it is repeated for all stores. it is obvious for those skilled in the art that centroid of population could be derived by averaging a multivariate variable of all stores. Here weighted average is used in which magnitude-of-importance of each factor pattern is taken as weight. Thus, each store will have an estimated multivariate distance and it indicates level of potential hyper localization for the category owned by the store. The weighted multivariate distance may be standardized to bring into the scale of 0 to 1 for easy reference in which store with value of 0 indicates store with lowest potential hyper localization for the category and store with value of 1 indicates store with highest potential hyper localization for the category. Stores that are influenced by varying customer preferences due to ethnicity or lifestyle or weather conditions etc. may be noted as hyper localized stores. The central database is updated with the identified hyper localized stores and their hyper localization values to enable operations associated with hyper localization across value chain.

Quantification of hyper localization for each store cluster for each category: It is done by considering notable local factor patterns and calculating weighted multivariate distance between stores. Weighted multivariate distance for factor patterns is calculated between stores in which each notable local factor pattern acts as a variable and combination of all notable local factor patterns, form a multivariate and magnitude-of-importance of each factor pattern is taken as weight for multivariate distance estimation. Based on the calculated weighted multivariate distance, clustering of stores is done using techniques such as K means clustering. Centroid of population is derived by averaging the multivariate of all stores and here weighted average is used in which magnitude-of-importance of each factor pattern is taken as weight. Centroid of a cluster is derived by averaging the multivariate of all stores within corresponding cluster. Here weighted average is used in which magnitude-of-importance of each factor pattern is taken as weight. Weighted multivariate distance between centroid of population and centroid of a store cluster is calculated and it is repeated for all clusters. Thus, each cluster will have an estimated multivariate distance and it indicates level of potential hyper localization owned by the cluster. The weighted multivariate distance may be standardized to bring into the scale of 0 to 1 for easy reference in which cluster with value of 0 indicates cluster with lowest potential hyper localization and cluster with value of 1 indicates cluster with highest potential hyper localization. The store clusters that are influenced by varying customer preferences due to ethnicity or lifestyle or weather conditions etc. may be noted as hyper localized store clusters. The central database is updated with the identified hyper localized store clusters and their hyper localization values to enable operations associated with localization across value chain.

At step 218, the HL module executed by the one or more hardware processors updates the central database with (a) the identified set of sales patterns and the measure of importance of each sales pattern and identified set of notable items under each sales pattern, (b) the identified set of localized complementary notable items and the identified set of localized competitive notable items, and (c) the quantified measure of hyper localization of each notable item, each category, each store and each store cluster. Further, enables operations associated with (a) the identified set of localized complementary notable items and the identified set of localized competitive notable items, and (b) the quantified hyper localization of each notable item, each category, each store and each store cluster which is done across value chain through a plurality of associated applications that are linked with the central data base. Different applications are connected between themselves and connected with central database through interfaces, and it enables implementation hyper localization operations across retail value chain. effectively.

At step 220, the one or more hardware processors 104 enable integration of a plurality of applications that are linked with the central data base to optimize operations associated with hyper localization across value chain. As depicted in Fig. 1B, the plurality of applications pertains to procurement, transport, logistic, storage, packaging, brick and mortar stores, online sales, display, advertisement, and the like.

Model development to address different operations associated with hyper localization across value chain involving prediction and optimization, such as (1) route optimization for transport and logistics associated with HL items, categories, stores, (2) Placement of HL item or category within transport vehicle (3) identification of distribution centers and (4) Placement of HL item or category within distribution center, etc., may be carried out through analytical module (not shown) based on identified hyper localized items or categories or stores or store clusters by giving importance to respective measure of importance of hyper localization which may increase accuracy of prediction or optimization. In this case, general items or category or store or store clusters may act as noise, and they may not be considered for model development and thus the noise may be reduced to improve accuracy of prediction or efficiency of optimization. For example, a major US retailer stocks about 60 types of canned chili but carries only three nationwide. The rest are allocated according to local tastes, and it may be achieved through analytical module (not shown) by applying suitable optimization technique for allocation based on identified hyper localized items, stores or store clusters and by giving importance to respective measure of importance of hyper localization which may increase accuracy of prediction or optimization.

As the central data base is linked by different applications associated with different operations related to various applications such as item procurement, supply chain and logistics, packaging, online sales, retail operations related with localization involving items, categories, stores and store clusters across value chain may be achieved effectively and few instances are described as below.

Localized Procurement - The identified hyper localized items or hyper localized categories may be used by procurement system through suitable interface with central database to procure hyper localized items or categories from local producers to address local food tastes and may reduce logistic distance effectively and it may serve for identified hyper localized store or hyper localized store clusters through connected interface with central database.

Localized Supply Chain and logistics - Through suitable interface with central database retailers may be able to allocate hyper localized and non-hyper localized items to different carrier routes for optimized delivery by avoiding overstretched supply chains and it may be achieved by utilization of information of category specific hyper localized store or hyper localized store clusters and hyper localized items.

Localized packaging - As per a study, nearly 73% of consumers prefer to buy items in their native language while 56% note that the ability to obtain relevant information in their native language that addresses their locale is more important to them than price. Hence post identifying the hyper localized items and their measure of hyper localization for the hyper localized store or store clusters, the retailer may be able to localize packaging through suitable interface with central database and packaging applications to improve the sales. Category with higher hyper localized values has higher differentiation of items within the category as these items need store specific operations. Category with lower hyper localized values has items with lesser differentiation as they do not need store specific operations. In one instance, category with very high hyper localized values is packed in multiple packages for transport and distribution center as compared to single package and it enables to distribute items that are store specific. Thus, retailer may be able to localize operations through suitable interface with central database.

Information about the list of items in a group facilitate a series of operations through interface. In an instance, Asian/Chinese groceries such as Noodles, Soy sauce, vinegar may be procured at same time from same vendor or different vendors from the received information of central database related with notable sales pattern, their measure of importance and list of items and they may be packed in a suitable way that they are able to be transported as a group to DC (Distribution Center). In another instance, European groceries indicated by a notable sales pattern may be grouped separately and carry out operations across value chain. In another instance, it enables to ensure that one item of an Asian groceries is not grouped with European groceries. Same way high end mobiles may not be combined with low end mobiles. Warning signs may be provided in respective system or application when an item in one group is moved to another group during packaging or similar operations. Same way, warning signs may be provided when localized items are mixed with general items or non-localized items for packaging.

Suggestions may be provided in respective system by listing those items or categories or stores or store clusters in order of hyper localization measures by which the effort for the user in locating required items or categories, etc. is minimized Localized display of items - In retail domain, assortment tool is used for selection of items for a category that need to be kept in a store or store cluster for a period of time. It has a limitation that it does not disclose the order of display to be given for the selected products in the rack. The limitation may be overcome by taking combined decision in such a way that if a product or set of products are selected by assortment tool, its display decision may be taken based on below procedure.

Priority of display of items in a rack for a store is decided based on order of magnitude of importance of corresponding sales pattern among a plurality of set of sales patterns with corresponding magnitude of importance for a category. Thus, based on magnitude of importance of each notable sales pattern, the set of items under each notable sales pattern are graded as first rank, second rank, third rank, etc. and are exposed to shopper based on their rank. For example, the set of items with first rank may be given preferences in a rack which has maximum visibility or attention. All the items under first rank may be displayed as a group or arranged near to each other in the **rack. In one instance, all the items under one `set of notable items' are displayed as a group or arranged near to each other in the rack. For example, `Asian/Chinese** groceries **such as Noodles, Soy sauce, vinegar' may form a set.** In another instance, in apparel category, ethnic wear of one group may come under first set of items and ethnic wear of another group may come as second set of items. Sales of first set may differ from second set based on local factors.

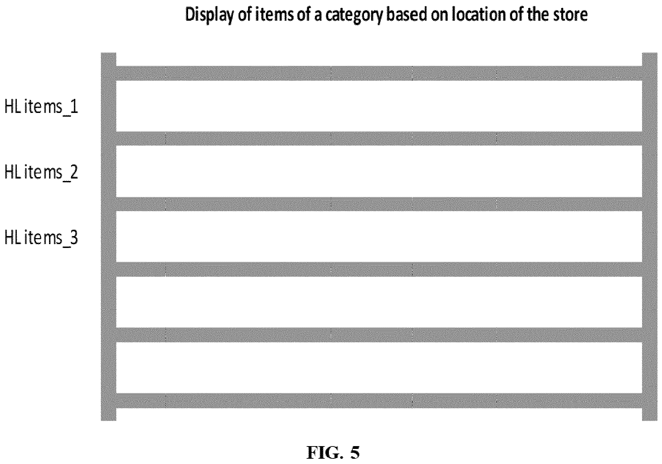

FIG. 5 depicts example planogram of hyper localized items to be placed on the rack, which is generated based on the assortment tool, in accordance with some embodiments of the present disclosure. Set of items that have highest magnitude of importance are the items influenced mostly by localization and those items may be assigned to the shelf which has most vision for the shopper. In the diagram it takes the row against HL items _1. The set of items that have next level of magnitude of importance may be given second priority and noted as HL items _2. In similar fashion, the magnitude of HL values may be used in different ways for display purposes as per retailer's rack arrangements. E.g., HL items for a store in location of high Italian population may be stocked with items like pasta, olive oil, cheese, sauces with first rank in the line of sight of respective shelves. They may be given preferences in a rack which has maximum visibility to seek attention of the customers to increase complementary buys and total basket value.

Localized online shopping- Consumers may be served with the most relevant, localized content, offers, information, and insights. which may be termed as website mobilization, it may be achieved based on the identified hyper localized items or categories and their measures through suitable interface with central database. For instance, a retailer selling a coffee brand, homepage of their site for US presents a static logo with a background video while the Japanese version is more modular with an abundance of hyper localized item images of different flavors and corresponding descriptions/information as preferred by the Japan regions

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. **Also, the words "comprising," "having," "containing," and "including," and other** similar forms are intended to be equivalent in meaning and be open ended in that an item or items following any one of these words is not meant to be an exhaustive listing of such item or items or meant to be limited to only the listed item or items. It must also be noted that as used herein and in the appended claims, the si**ngular forms "a," "an," and "the" include plural references unless the context clearly dictates otherwise.**

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent **with the embodiments described herein. The term "computer-readable medium" should** be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), the method comprising:
obtaining (202), by one or more hardware processors, (a) individual sales for each item among a plurality of items for a category among a plurality of categories at a zip code level from market data for a predefined period, and (b) a plurality of local factors associated with the category at the zip code level;
positioning (204), by the one or more hardware processors, (a) the individual sales for each item in a columnar format to enable deriving relationship across the plurality of items within the category and, (b) each of the plurality of local factors in the columnar format to enable relationship across the plurality of local factors;
identifying (206), by the one or more hardware processors, (a) a set of sales patterns from linear combinations of individual sales of each of the plurality of items, and (b) a set of local factor patterns from linear combinations of each of the plurality local factors by maximizing relationship between the set of sales patterns and the set of local factor patterns by applying a canonical analysis between the individual sales of each item in columnar format and the plurality of local factors in columnar format;
determining (208), by the one or more hardware processors, (a) a plurality of notable sales patterns from among the plurality of sales patterns and a plurality of notable local factor patterns from among the **plurality of local factor patterns based on Wilks' lambda criterion** provided by the canonical analysis, and (b) a magnitude-of-importance of each notable sales pattern and a magnitude-of-importance of each notable local factor pattern based on variance contribution by corresponding notable sales pattern and notable local factor pattern respectively provided by the canonical analysis;
determining (210), by the one or more hardware processors, a) a set of notable items for each notable sales pattern, from among the plurality of items based on a significance parameter provided by the canonical analysis, and b) a magnitude-of-importance of each notable item among the set of notable items for each of the notable sales patterns, wherein the magnitude-of-importance of each notable item is measured using canonical loadings provided by the canonical analysis;
identifying (212), by the one or more hardware processors, a set of localized complementary notable items and a set of localized competitive notable items from among the set of notable items for each of the notable sales pattern based on direction of the magnitude-of-importance, wherein (a) the set of localized complementary notable items for a corresponding notable sales pattern is identified from a positive magnitude-of-importance of the set of notable items, and (b) the set of localized competitive notable items for the corresponding notable sales pattern is identified based on a negative magnitude-of-importance of the set of notable items;
performing (214), by the one or more hardware processors, automation of a plurality of rules for an assortment tool based on (a) the identified set of localized complementary notable items for a notable sales pattern which are labeled as group A, and (b) the identified set of localized competitive items for the notable sales pattern which are labeled as group B, and wherein the assortment tool is enabled to ensure (i) if one or more items are selected from a group, then all items in the group are selected, and (ii) if all the items in group A are selected, then all the items in group B are deselected and if all the items in group A are deselected, then all the items in group B are selected;
performing, (216) by the one or more hardware processors, quantification of hyper localization of (a) each notable item among the notable items, (b) each category among the plurality of categories, (c) each store among a plurality of stores storing one or more of the plurality of items for one or more of the plurality of categories, and (d) each store cluster among a plurality of store clusters for one or more of the plurality of categories formed by the plurality of stores;
updating (218) by the one or more hardware processors, a central database with (a) the identified set of sales patterns and the measure of importance of each sales pattern and identified set of notable items under each sales pattern, (b) the identified set of localized complementary notable items and the identified set of localized competitive notable items, and (c) the quantified measure of hyper localization of each notable item, each category, each store and each store cluster; and
enabling (220) by the one or more hardware processors, integration of a plurality of applications that are linked with the central data base to optimize operations associated with hyper localization across value chain, wherein the plurality of applications pertains to procurement, transport, logistic, storage, packaging, sales in brick and mortar stores, online sales, display, and advertisement.

2. The method of claim 1, wherein the quantification of hyper localization for each notable item is performed by considering the magnitude-of-importance of each of the notable item and the magnitude-of-importance for a corresponding notable sales pattern from among the plurality of notable sales patterns.

3. The method of claim 1, wherein the quantification of hyper localization for each category is performed based on sum of the magnitude-of-importance of each notable sales pattern for each category.

4. The method of claim 1, wherein the quantification of hyper localization for each store is performed based on a weighted multivariate distance between a notable local factor pattern of a store and a centroid of population, wherein the centroid of population is derived from notable local factor patterns of all stores of the population, and the quantification of hyper localization for each store cluster is performed based on weighted multivariate distance between a population centroid and a cluster centroid, wherein the centroid of population is derived from the plurality of notable local factor patterns of all stores of the population and cluster centroid is derived from the plurality of notable local factor patterns of all stores of the cluster and weight is derived from the magnitude-of-importance of each of the notable factor pattern.

5. The method of claim 1, wherein priority of display of items in a rack for a store is decided based on order of magnitude of importance of corresponding sales pattern among a plurality of set of sales patterns for a category.

6. The method of claim 1, wherein lost sales due to missed items in historical assortment is captured and potential of stores are considered for hyper localization strategies by applying market data for obtaining individual item sales.

7. A system (100) comprising:
a memory (102) storing instructions;
one or more Input/Output (I/O) interfaces (106); and
one or more hardware processors (104) coupled to the memory (102) via the one or more I/O interfaces (106),
an assortment tool, and a central database linked to a plurality of applications,
wherein the one or more hardware processors (104) are configured by the instructions to:
obtain, (a) individual sales for each item among a plurality of items for a category among a plurality of categories at a zip code level from market data for a predefined period, and (b) a plurality of local factors associated with the category at the zip code level;
position, (a) the individual sales for each item in a columnar format to enable deriving relationship across the plurality of items within the category and (b) each of the plurality of local factors in the columnar format to enable relationship across the plurality of local factors;
identify, (a) a set of sales patterns from linear combinations of individual sales of each of the plurality of items and (b) a set of local factor patterns from linear combinations of each of the plurality local factors by maximizing relationship between the set of sales patterns and the set of local factor patterns by applying a canonical analysis between the individual sales of each item in columnar format and the plurality of local factors in columnar format;
determine, (a) a plurality of notable sales patterns from among the plurality of sales patterns and a plurality of notable local factor patterns **from among the plurality of local factor patterns based on Wilks' lambda** criterion provided by the canonical analysis, and (b) a magnitude-of-importance of each notable sales pattern and a magnitude-of-importance of each notable local factor pattern based on variance contribution by corresponding notable sales pattern and notable local factor pattern provided by the canonical analysis;
determine, (a) a set of notable items for each notable sales pattern, from among the plurality of items based on a significance parameter provided by the canonical analysis, and (b) a magnitude -of-importance of each notable item among the set of notable items for each of the notable sales pattern, wherein the magnitude-of-importance of each notable item is measured using canonical loadings provided by the canonical analysis;
identify, a set of localized complementary notable items and a set of localized competitive notable items from among the set of notable items for each of the notable sales pattern based on direction of the magnitude-of-importance, wherein (a) the set of localized complementary notable items for a corresponding notable sales pattern is identified from a positive magnitude-of-importance of the set of notable items and (b) the set of localized competitive notable items for the corresponding notable sales pattern is identified based on a negative magnitude-of-importance of the set of notable items;
perform automation of a plurality of rules for the assortment tool based on (a) the identified set of localized complementary notable items for a notable sales pattern which are labeled as group A and (b) the identified set of localized competitive items for the notable sales pattern which are labeled as group B, and wherein the assortment tool is enabled to ensure (i) if one or more items are selected from a group, then all items in the group are selected, and (ii) if all the items in group A are selected, then all the items in group B are deselected and if all the items in group A are deselected, then all the items in group B are selected;
perform quantification of hyper localization of (a) each notable item among the notable items, (b) each category among the plurality of categories, (c) each store among a plurality of stores storing one or more of the plurality of items for one or more of the plurality of categories and (d) each store cluster among a plurality of store clusters for one or more of the plurality of categories formed by the plurality of stores;
update the central database with (a) the identified set of sales patterns and the measure of importance of each sales pattern and identified set of notable items under each sales pattern (b) the identified set of localized complementary notable items and the identified set of localized competitive notable items and (c) the quantified measure of hyper localization of each notable item, each category, each store and each store cluster; and
enable integration of the plurality of applications that are linked with the central data base to optimize operations associated with hyper localization across value chain, wherein the plurality of applications pertains to procurement, transport, logistic, storage, packaging, brick and mortar stores, online sales, display, and advertisement.

8. The system (100) of claim 7, wherein the one or more hardware processors (104) are configured to perform quantification of hyper localization for each notable item by considering the magnitude-of-importance of each of the notable item and the magnitude-of-importance for a corresponding notable sales pattern from among the plurality of notable sales patterns.

9. The system (100) of claim 7, wherein the one or more hardware processors (104) are configured to perform the quantification of hyper localization for each category based on sum of the magnitude-of-importance of each notable sales pattern for each category.

10. The system (100) of claim 7, wherein the one or more hardware processors (104) are configured to perform the quantification of hyper localization for each store based on a weighted multivariate distance between a notable local factor pattern of a store and a centroid of population, wherein the centroid of population is derived from notable local factor patterns of all stores of the population, and the quantification of hyper localization for each store cluster is performed based on weighted multivariate distance between a population centroid and a cluster centroid, wherein the centroid of population is derived from notable local factor patterns of all stores of the population and cluster centroid is derived from notable local factor patterns of all stores of the cluster and weight is derived from the magnitude-of-importance of each of the notable local factor pattern.

11. The system (100) of claim 7, wherein the one or more hardware processors (104) are configured to decide priority of display of items in a rack for a store based on order of magnitude of importance of corresponding sales pattern among a plurality of set of sales patterns for a category.

12. The system (100) of claim 7, wherein the one or more hardware processors (104) are configured to capture lost sales due to missed items in historical assortment and potential of stores are considered for hyper localization strategies by applying market data for obtaining individual item sales.

13. One or more non-transitory machine-readable information storage mediums comprising one or more instructions which when executed by one or more hardware processors cause:
obtaining, (a) individual sales for each item among a plurality of items for a category among a plurality of categories at a zip code level from market data for a predefined period, and (b) a plurality of local factors associated with the category at the zip code level;
positioning, (a) the individual sales for each item in a columnar format to enable deriving relationship across the plurality of items within the category and, (b) each of the plurality of local factors in the columnar format to enable relationship across the plurality of local factors;
identifying, (a) a set of sales patterns from linear combinations of individual sales of each of the plurality of items, and (b) a set of local factor patterns from linear combinations of each of the plurality local factors by maximizing relationship between the set of sales patterns and the set of local factor patterns by applying a canonical analysis between the individual sales of each item in columnar format and the plurality of local factors in columnar format;
determining, (a) a plurality of notable sales patterns from among the plurality of sales patterns and a plurality of notable local factor patterns from among the plurality of local factor patterns based on **Wilks' lambda criterion provided by the canonical analysis, and (b) a** magnitude-of-importance of each notable sales pattern and a magnitude-of-importance of each notable local factor pattern based on variance contribution by corresponding notable sales pattern and notable local factor pattern respectively provided by the canonical analysis;
determining, a) a set of notable items for each notable sales pattern, from among the plurality of items based on a significance parameter provided by the canonical analysis, and b) a magnitude-of-importance of each notable item among the set of notable items for each of the notable sales patterns, wherein the magnitude-of-importance of each notable item is measured using canonical loadings provided by the canonical analysis;
identifying, a set of localized complementary notable items and a set of localized competitive notable items from among the set of notable items for each of the notable sales pattern based on direction of the magnitude-of-importance, wherein (a) the set of localized complementary notable items for a corresponding notable sales pattern is identified from a positive magnitude-of-importance of the set of notable items, and (b) the set of localized competitive notable items for the corresponding notable sales pattern is identified based on a negative magnitude-of-importance of the set of notable items;
performing, automation of a plurality of rules for an assortment tool based on (a) the identified set of localized complementary notable items for a notable sales pattern which are labeled as group A, and (b) the identified set of localized competitive items for the notable sales pattern which are labeled as group B, and wherein the assortment tool is enabled to ensure (i) if one or more items are selected from a group, then all items in the group are selected, and (ii) if all the items in group A are selected, then all the items in group B are deselected and if all the items in group A are deselected, then all the items in group B are selected;
performing, quantification of hyper localization of (a) each notable item among the notable items, (b) each category among the plurality of categories, (c) each store among a plurality of stores storing one or more of the plurality of items for one or more of the plurality of categories, and (d) each store cluster among a plurality of store clusters for one or more of the plurality of categories formed by the plurality of stores;
updating, a central database with (a) the identified set of sales patterns and the measure of importance of each sales pattern and identified set of notable items under each sales pattern, (b) the identified set of localized complementary notable items and the identified set of localized competitive notable items, and (c) the quantified measure of hyper localization of each notable item, each category, each store and each store cluster; and
enabling, integration of a plurality of applications that are linked with the central data base to optimize operations associated with hyper localization across value chain, wherein the plurality of applications pertains to procurement, transport, logistic, storage, packaging, sales in brick and mortar stores, online sales, display, and advertisement.

14. The one or more non-transitory machine-readable information storage mediums of claim 13, wherein the quantification of hyper localization for each notable item is performed by considering the magnitude-of-importance of each of the notable item and the magnitude-of-importance for a corresponding notable sales pattern from among the plurality of notable sales patterns.

15. The one or more non-transitory machine-readable information storage mediums of claim 13, wherein the quantification of hyper localization for each category is performed based on sum of the magnitude-of-importance of each notable sales pattern for each category and wherein the quantification of hyper localization for each store is performed based on a weighted multivariate distance between a notable local factor pattern of a store and a centroid of population, wherein the centroid of population is derived from notable local factor patterns of all stores of the population, and the quantification of hyper localization for each store cluster is performed based on weighted multivariate distance between a population centroid and a cluster centroid, wherein the centroid of population is derived from the plurality of notable local factor patterns of all stores of the population and cluster centroid is derived from the plurality of notable local factor patterns of all stores of the cluster and weight is derived from the magnitude-of-importance of each of the notable factor pattern.

## Patentansprüche

1. Prozessorimplementiertes Verfahren (200), wobei das Verfahren umfasst:
Erhalten (202), durch einen oder mehrere Hardwareprozessoren, (a) individueller Verkäufe für jedes Element aus einer Mehrzahl von Elementen für eine Kategorie aus einer Mehrzahl von Kategorien auf einer Postleitzahl-Ebene aus Marktdaten für einen vordefinierten Zeitraum, und (b) einer Mehrzahl von lokalen Faktoren, die mit der Kategorie auf der Postleitzahl-Ebene assoziiert sind;
Positionieren (204), durch den einen oder die mehreren Hardwareprozessoren, (a) der individuellen Verkäufe für jedes Element in einem Säulenformat, um ein Ableiten einer Beziehung über die Mehrzahl von Elementen innerhalb der Kategorie zu ermöglichen, und (b) jedes der Mehrzahl von lokalen Faktoren in dem Säulenformat, um eine Beziehung über die Mehrzahl von lokalen Faktoren zu ermöglichen;
Identifizieren (206), durch den einen oder die mehreren Hardwareprozessoren, (a) eines Satzes von Verkaufsmustern aus linearen Kombinationen individueller Verkäufe jedes der Mehrzahl von Elementen, und (b) eines Satzes von lokalen Faktormustern aus linearen Kombinationen jedes der Mehrzahl von lokalen Faktoren durch Maximieren einer Beziehung zwischen dem Satz von Verkaufsmustern und dem Satz von lokalen Faktormustern durch Anwenden einer kanonischen Analyse zwischen den individuellen Verkäufen jedes Elements im Säulenformat und der Mehrzahl von lokalen Faktoren im Säulenformat;
Bestimmen (208), durch den einen oder die mehreren Hardwareprozessoren, (a) einer Mehrzahl von bemerkenswerten Verkaufsmustern aus der Mehrzahl von Verkaufsmustern und einer Mehrzahl von bemerkenswerten lokalen Faktormustern aus der Mehrzahl von lokalen Faktormustern basierend auf einem Lambda-Kriterium von Wilks, das durch die kanonische Analyse bereitgestellt wird, und (b) einer Wichtigkeitsgröße jedes bemerkenswerten Verkaufsmusters und einer Wichtigkeitsgröße jedes bemerkenswerten lokalen Faktormusters basierend auf einem Varianzbeitrag durch ein entsprechendes bemerkenswertes Verkaufsmuster und bemerkenswertes lokales Faktormuster, die jeweils durch die kanonische Analyse bereitgestellt werden;
Bestimmen (210), durch den einen oder die mehreren Hardwareprozessoren, a) eines Satzes von bemerkenswerten Elementen für jedes bemerkenswerte Verkaufsmuster aus der Mehrzahl von Elementen basierend auf einem Signifikanzparameter, der durch die kanonische Analyse bereitgestellt wird, und b) einer Wichtigkeitsgröße jedes bemerkenswerten Elements aus dem Satz von bemerkenswerten Elementen für jedes der bemerkenswerten Verkaufsmuster, wobei die Wichtigkeitsgröße jedes bemerkenswerten Elements unter Verwendung kanonischer Belastungen gemessen wird, die durch die kanonische Analyse bereitgestellt werden;
Identifizieren (212), durch den einen oder die mehreren Hardwareprozessoren, eines Satzes von lokalisierten komplementären bemerkenswerten Elementen und eines Satzes von lokalisierten konkurrierenden bemerkenswerten Elementen aus dem Satz von bemerkenswerten Elementen für jedes der bemerkenswerten Verkaufsmuster basierend auf einer Richtung der Wichtigkeitsgröße, wobei (a) der Satz von lokalisierten komplementären bemerkenswerten Elementen für ein entsprechendes bemerkenswertes Verkaufsmuster aus einer positiven Wichtigkeitsgröße des Satzes von bemerkenswerten Elementen identifiziert wird, und (b) der Satz von lokalisierten konkurrierenden bemerkenswerten Elementen für das entsprechende bemerkenswerte Verkaufsmuster basierend auf einer negativen Wichtigkeitsgröße des Satzes von bemerkenswerten Elementen identifiziert wird;
Durchführen (214), durch den einen oder die mehreren Hardwareprozessoren, einer Automatisierung einer Mehrzahl von Regeln für ein Sortimentswerkzeug basierend auf (a) dem identifizierten Satz von lokalisierten komplementären bemerkenswerten Elementen für ein bemerkenswertes Verkaufsmuster, die als Gruppe A gekennzeichnet sind, und (b) dem identifizierten Satz von lokalisierten konkurrierenden Elementen für das bemerkenswerte Verkaufsmuster, die als Gruppe B gekennzeichnet sind, und wobei das Sortimentswerkzeug in der Lage ist, sicherzustellen, dass (i) wenn ein oder mehrere Elemente aus einer Gruppe ausgewählt werden, alle Elemente in der Gruppe ausgewählt werden, und (ii) wenn alle Elemente in Gruppe A ausgewählt werden, alle Elemente in Gruppe B abgewählt werden, und wenn alle Elemente in Gruppe A abgewählt werden, alle Elemente in Gruppe B ausgewählt werden;
Durchführen (216), durch den einen oder die mehreren Hardwareprozessoren, einer Quantifizierung einer Hyperlokalisierung von (a) jedem bemerkenswerten Element aus den bemerkenswerten Elementen, (b) jeder Kategorie aus der Mehrzahl von Kategorien, (c) jedem Geschäft aus einer Mehrzahl von Geschäften, die ein oder mehrere der Mehrzahl von Elementen für eine oder mehrere der Mehrzahl von Kategorien speichern, und (d) jedem Geschäftscluster aus einer Mehrzahl von Geschäftsclustern für eine oder mehrere der Mehrzahl von Kategorien, die durch die Mehrzahl von Geschäften gebildet werden;
Aktualisieren (218), durch den einen oder die mehreren Hardwareprozessoren, einer zentralen Datenbank mit (a) dem identifizierten Satz von Verkaufsmustern und dem Wichtigkeitsmaß jedes Verkaufsmusters und dem identifizierten Satz von bemerkenswerten Elementen unter jedem Verkaufsmuster, (b) dem identifizierten Satz von lokalisierten komplementären bemerkenswerten Elementen und dem identifizierten Satz von lokalisierten konkurrierenden bemerkenswerten Elementen, und (c) dem quantifizierten Maß der Hyperlokalisierung jedes bemerkenswerten Elements, jeder Kategorie, jedes Geschäfts und jedes Geschäftsclusters; und
Ermöglichen (220), durch den einen oder die mehreren Hardwareprozessoren, einer Integration einer Mehrzahl von Anwendungen, die mit der zentralen Datenbank verknüpft sind, um Operationen zu optimieren, die mit einer Hyperlokalisierung über eine Wertschöpfungskette hinweg assoziiert sind, wobei die Mehrzahl von Anwendungen Beschaffung, Transport, Logistik, Lagerung, Verpackung, Verkauf in Ziegel- und Mörtelgeschäften, Online-Verkauf, Anzeige und Werbung betrifft.

2. Verfahren nach Anspruch 1, wobei die Quantifizierung einer Hyperlokalisierung für jedes bemerkenswerte Element unter Berücksichtigung der Wichtigkeitsgröße jedes der bemerkenswerten Elemente und der Wichtigkeitsgröße für ein entsprechendes bemerkenswertes Verkaufsmuster aus der Mehrzahl von bemerkenswerten Verkaufsmustern durchgeführt wird.

3. Verfahren nach Anspruch 1, wobei die Quantifizierung einer Hyperlokalisierung für jede Kategorie basierend auf einer Summe der Wichtigkeitsgröße jedes bemerkenswerten Verkaufsmusters für jede Kategorie durchgeführt wird.

4. Verfahren nach Anspruch 1, wobei die Quantifizierung einer Hyperlokalisierung für jedes Geschäft basierend auf einem gewichteten multivariaten Abstand zwischen einem bemerkenswerten lokalen Faktormuster eines Geschäfts und einem Schwerpunkt der Bevölkerung durchgeführt wird, wobei der Schwerpunkt der Bevölkerung von bemerkenswerten lokalen Faktormustern aller Geschäfte der Bevölkerung abgeleitet ist, und die Quantifizierung einer Hyperlokalisierung für jedes Geschäftscluster basierend auf einem gewichteten multivariaten Abstand zwischen einem Schwerpunkt der Bevölkerung und einem Schwerpunkt des Clusters durchgeführt wird, wobei der Schwerpunkt der Bevölkerung von der Mehrzahl von bemerkenswerten lokalen Faktormustern aller Geschäfte der Bevölkerung abgeleitet ist und der Schwerpunkt des Clusters von der Mehrzahl von bemerkenswerten lokalen Faktormustern aller Geschäfte des Clusters abgeleitet ist und das Gewicht von der Wichtigkeitsgröße jedes der bemerkenswerten Faktormuster abgeleitet ist.

5. Verfahren nach Anspruch 1, wobei die Priorität der Anzeige von Elementen in einem Regal für ein Geschäft basierend auf der Reihenfolge der Wichtigkeitsgröße eines entsprechenden Verkaufsmusters aus einer Mehrzahl von Verkaufsmustern für eine Kategorie entschieden wird.

6. Verfahren nach Anspruch 1, wobei verlorene Verkäufe aufgrund von verpassten Elementen in einem historischen Sortiment erfasst werden und das Potenzial von Geschäften für Hyperlokalisierungsstrategien durch Anwenden von Marktdaten zum Erhalten individueller Elementverkäufe berücksichtigt wird.

7. System (100), umfassend:
einen Speicher (102), der Anweisungen speichert;
eine oder mehrere Eingabe/Ausgabe(E/A)-Schnittstellen (106); und
einen oder mehrere Hardwareprozessoren (104), die über die eine oder die mehreren E/A-Schnittstellen (106) mit dem Speicher (102) gekoppelt sind, ein Sortimentswerkzeug und eine zentrale Datenbank, die mit einer Mehrzahl von Anwendungen verknüpft ist,
wobei der eine oder die mehreren Hardwareprozessoren (104) durch die Anweisungen konfiguriert sind zum:
Erhalten (a) individueller Verkäufe für jedes Element aus einer Mehrzahl von Elementen für eine Kategorie aus einer Mehrzahl von Kategorien auf einer Postleitzahl-Ebene aus Marktdaten für einen vordefinierten Zeitraum, und (b) einer Mehrzahl von lokalen Faktoren, die mit der Kategorie auf der Postleitzahl-Ebene assoziiert sind;
Positionieren (a) der individuellen Verkäufe für jedes Element in einem Säulenformat, um ein Ableiten einer Beziehung über die Mehrzahl von Elementen innerhalb der Kategorie zu ermöglichen, und (b) jedes der Mehrzahl von lokalen Faktoren in dem Säulenformat, um eine Beziehung über die Mehrzahl von lokalen Faktoren zu ermöglichen;
Identifizieren (a) eines Satzes von Verkaufsmustern aus linearen Kombinationen individueller Verkäufe jedes der Mehrzahl von Elementen und (b) eines Satzes von lokalen Faktormustern aus linearen Kombinationen jedes der Mehrzahl von lokalen Faktoren durch Maximieren einer Beziehung zwischen dem Satz von Verkaufsmustern und dem Satz von lokalen Faktormustern durch Anwenden einer kanonischen Analyse zwischen den individuellen Verkäufen jedes Elements im Säulenformat und der Mehrzahl von lokalen Faktoren im Säulenformat;
Bestimmen (a) einer Mehrzahl von bemerkenswerten Verkaufsmustern aus der Mehrzahl von Verkaufsmustern und einer Mehrzahl von bemerkenswerten lokalen Faktormustern aus der Mehrzahl von lokalen Faktormustern basierend auf einem Lambda-Kriterium von Wilks, das durch die kanonische Analyse bereitgestellt wird, und (b) einer Wichtigkeitsgröße jedes bemerkenswerten Verkaufsmusters und einer Wichtigkeitsgröße jedes bemerkenswerten lokalen Faktormusters basierend auf einem Varianzbeitrag durch ein entsprechendes bemerkenswertes Verkaufsmuster und bemerkenswertes lokales Faktormuster, die durch die kanonische Analyse bereitgestellt werden;
Bestimmen (a) eines Satzes von bemerkenswerten Elementen für jedes bemerkenswerte Verkaufsmuster aus der Mehrzahl von Elementen basierend auf einem Signifikanzparameter, der durch die kanonische Analyse bereitgestellt wird, und (b) einer Wichtigkeitsgröße jedes bemerkenswerten Elements aus dem Satz von bemerkenswerten Elementen für jedes der bemerkenswerten Verkaufsmuster, wobei die Wichtigkeitsgröße jedes bemerkenswerten Elements unter Verwendung kanonischer Belastungen gemessen wird, die durch die kanonische Analyse bereitgestellt werden;
Identifizieren eines Satzes von lokalisierten komplementären bemerkenswerten Elementen und eines Satzes von lokalisierten konkurrierenden bemerkenswerten Elementen aus dem Satz von bemerkenswerten Elementen für jedes der bemerkenswerten Verkaufsmuster basierend auf einer Richtung der Wichtigkeitsgröße, wobei (a) der Satz von lokalisierten komplementären bemerkenswerten Elementen für ein entsprechendes bemerkenswertes Verkaufsmuster aus einer positiven Wichtigkeitsgröße des Satzes von bemerkenswerten Elementen identifiziert wird, und (b) der Satz von lokalisierten konkurrierenden bemerkenswerten Elementen für das entsprechende bemerkenswerte Verkaufsmuster basierend auf einer negativen Wichtigkeitsgröße des Satzes von bemerkenswerten Elementen identifiziert wird;
Durchführen einer Automatisierung einer Mehrzahl von Regeln für das Sortimentswerkzeug basierend auf (a) dem identifizierten Satz von lokalisierten komplementären bemerkenswerten Elementen für ein bemerkenswertes Verkaufsmuster, die als Gruppe A gekennzeichnet sind, und (b) dem identifizierten Satz von lokalisierten konkurrierenden Elementen für das bemerkenswerte Verkaufsmuster, die als Gruppe B gekennzeichnet sind, und wobei das Sortimentswerkzeug in der Lage ist, sicherzustellen, dass (i) wenn ein oder mehrere Elemente aus einer Gruppe ausgewählt werden, alle Elemente in der Gruppe ausgewählt werden, und (ii) wenn alle Elemente in Gruppe A ausgewählt werden, alle Elemente in Gruppe B abgewählt werden, und wenn alle Elemente in Gruppe A abgewählt werden, alle Elemente in Gruppe B ausgewählt werden;
Durchführen einer Quantifizierung einer Hyperlokalisierung von (a) jedem bemerkenswerten Element aus den bemerkenswerten Elementen, (b) jeder Kategorie aus der Mehrzahl von Kategorien, (c) jedem Geschäft aus einer Mehrzahl von Geschäften, die ein oder mehrere der Mehrzahl von Elementen für eine oder mehrere der Mehrzahl von Kategorien speichern, und (d) jedem Geschäftscluster aus einer Mehrzahl von Geschäftsclustern für eine oder mehrere der Mehrzahl von Kategorien, die durch die Mehrzahl von Geschäften gebildet werden;
Aktualisieren der zentralen Datenbank mit (a) dem identifizierten Satz von Verkaufsmustern und dem Wichtigkeitsmaß jedes Verkaufsmusters und dem identifizierten Satz von bemerkenswerten Elementen unter jedem Verkaufsmuster, (b) dem identifizierten Satz von lokalisierten komplementären bemerkenswerten Elementen und dem identifizierten Satz von lokalisierten konkurrierenden bemerkenswerten Elementen, und (c) dem quantifizierten Maß der Hyperlokalisierung jedes bemerkenswerten Elements, jeder Kategorie, jedes Geschäfts und jedes Geschäftsclusters; und
Ermöglichen einer Integration der Mehrzahl von Anwendungen, die mit der zentralen Datenbank verknüpft sind, um Operationen zu optimieren, die mit einer Hyperlokalisierung über eine Wertschöpfungskette hinweg assoziiert sind, wobei die Mehrzahl von Anwendungen Beschaffung, Transport, Logistik, Lagerung, Verpackung, Ziegel- und Mörtelgeschäfte, Online-Verkauf, Anzeige und Werbung betrifft.

8. System (100) nach Anspruch 7, wobei der eine oder die mehreren Hardwareprozessoren (104) konfiguriert sind, um eine Quantifizierung einer Hyperlokalisierung für jedes bemerkenswerte Element unter Berücksichtigung der Wichtigkeitsgröße jedes der bemerkenswerten Elemente und der Wichtigkeitsgröße für ein entsprechendes bemerkenswertes Verkaufsmuster aus der Mehrzahl von bemerkenswerten Verkaufsmustern durchzuführen.

9. System (100) nach Anspruch 7, wobei der eine oder die mehreren Hardwareprozessoren (104) konfiguriert sind, um die Quantifizierung einer Hyperlokalisierung für jede Kategorie basierend auf einer Summe der Wichtigkeitsgröße jedes bemerkenswerten Verkaufsmusters für jede Kategorie durchzuführen.

10. System (100) nach Anspruch 7, wobei der eine oder die mehreren Hardwareprozessoren (104) konfiguriert sind, um die Quantifizierung einer Hyperlokalisierung für jedes Geschäft basierend auf einem gewichteten multivariaten Abstand zwischen einem bemerkenswerten lokalen Faktormuster eines Geschäfts und einem Schwerpunkt der Bevölkerung durchzuführen, wobei der Schwerpunkt der Bevölkerung von bemerkenswerten lokalen Faktormustern aller Geschäfte der Bevölkerung abgeleitet ist, und die Quantifizierung einer Hyperlokalisierung für jedes Geschäftscluster basierend auf einem gewichteten multivariaten Abstand zwischen einem Schwerpunkt der Bevölkerung und einem Schwerpunkt des Clusters durchgeführt wird, wobei der Schwerpunkt der Bevölkerung von bemerkenswerten lokalen Faktormustern aller Geschäfte der Bevölkerung abgeleitet ist und der Schwerpunkt des Clusters von bemerkenswerten lokalen Faktormustern aller Geschäfte des Clusters abgeleitet ist und das Gewicht von der Wichtigkeitsgröße jedes der bemerkenswerten lokalen Faktormuster abgeleitet ist.

11. System (100) nach Anspruch 7, wobei der eine oder die mehreren Hardwareprozessoren (104) konfiguriert sind, um die Priorität der Anzeige von Elementen in einem Regal für ein Geschäft basierend auf der Reihenfolge der Wichtigkeitsgröße eines entsprechenden Verkaufsmusters aus einer Mehrzahl von Verkaufsmustern für eine Kategorie zu entscheiden.

12. System (100) nach Anspruch 7, wobei der eine oder die mehreren Hardwareprozessoren (104) konfiguriert sind, um verlorene Verkäufe aufgrund von verpassten Elementen in einem historischen Sortiment zu erfassen und das Potenzial von Geschäften für Hyperlokalisierungsstrategien durch Anwenden von Marktdaten zum Erhalten individueller Elementverkäufe berücksichtigt wird.

13. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, bewirken:
Erhalten (a) individueller Verkäufe für jedes Element aus einer Mehrzahl von Elementen für eine Kategorie aus einer Mehrzahl von Kategorien auf einer Postleitzahl-Ebene aus Marktdaten für einen vordefinierten Zeitraum, und (b) einer Mehrzahl von lokalen Faktoren, die mit der Kategorie auf der Postleitzahl-Ebene assoziiert sind;
Positionieren (a) der individuellen Verkäufe für jedes Element in einem Säulenformat, um ein Ableiten einer Beziehung über die Mehrzahl von Elementen innerhalb der Kategorie zu ermöglichen, und (b) jedes der Mehrzahl von lokalen Faktoren in dem Säulenformat, um eine Beziehung über die Mehrzahl von lokalen Faktoren zu ermöglichen;
Identifizieren (a) eines Satzes von Verkaufsmustern aus linearen Kombinationen individueller Verkäufe jedes der Mehrzahl von Elementen, und (b) eines Satzes von lokalen Faktormustern aus linearen Kombinationen jedes der Mehrzahl von lokalen Faktoren durch Maximieren einer Beziehung zwischen dem Satz von Verkaufsmustern und dem Satz von lokalen Faktormustern durch Anwenden einer kanonischen Analyse zwischen den individuellen Verkäufen jedes Elements im Säulenformat und der Mehrzahl von lokalen Faktoren im Säulenformat;
Bestimmen (a) einer Mehrzahl von bemerkenswerten Verkaufsmustern aus der Mehrzahl von Verkaufsmustern und einer Mehrzahl von bemerkenswerten lokalen Faktormustern aus der Mehrzahl von lokalen Faktormustern basierend auf einem Lambda-Kriterium von Wilks, das durch die kanonische Analyse bereitgestellt wird, und (b) einer Wichtigkeitsgröße jedes bemerkenswerten Verkaufsmusters und einer Wichtigkeitsgröße jedes bemerkenswerten lokalen Faktormusters basierend auf einem Varianzbeitrag durch ein entsprechendes bemerkenswertes Verkaufsmuster und bemerkenswertes lokales Faktormuster, die jeweils durch die kanonische Analyse bereitgestellt werden;
Bestimmen (a) eines Satzes von bemerkenswerten Elementen für jedes bemerkenswerte Verkaufsmuster aus der Mehrzahl von Elementen basierend auf einem Signifikanzparameter, der durch die kanonische Analyse bereitgestellt wird, und (b) einer Wichtigkeitsgröße jedes bemerkenswerten Elements aus dem Satz von bemerkenswerten Elementen für jedes der bemerkenswerten Verkaufsmuster, wobei die Wichtigkeitsgröße jedes bemerkenswerten Elements unter Verwendung kanonischer Belastungen gemessen wird, die durch die kanonische Analyse bereitgestellt werden;
Identifizieren eines Satzes von lokalisierten komplementären bemerkenswerten Elementen und eines Satzes von lokalisierten konkurrierenden bemerkenswerten Elementen aus dem Satz von bemerkenswerten Elementen für jedes der bemerkenswerten Verkaufsmuster basierend auf einer Richtung der Wichtigkeitsgröße, wobei (a) der Satz von lokalisierten komplementären bemerkenswerten Elementen für ein entsprechendes bemerkenswertes Verkaufsmuster aus einer positiven Wichtigkeitsgröße des Satzes von bemerkenswerten Elementen identifiziert wird, und (b) der Satz von lokalisierten konkurrierenden bemerkenswerten Elementen für das entsprechende bemerkenswerte Verkaufsmuster basierend auf einer negativen Wichtigkeitsgröße des Satzes von bemerkenswerten Elementen identifiziert wird;
Durchführen einer Automatisierung einer Mehrzahl von Regeln für ein Sortimentswerkzeug basierend auf (a) dem identifizierten Satz von lokalisierten komplementären bemerkenswerten Elementen für ein bemerkenswertes Verkaufsmuster, die als Gruppe A gekennzeichnet sind, und (b) dem identifizierten Satz von lokalisierten konkurrierenden Elementen für das bemerkenswerte Verkaufsmuster, die als Gruppe B gekennzeichnet sind, und wobei das Sortimentswerkzeug in der Lage ist, sicherzustellen, dass (i) wenn ein oder mehrere Elemente aus einer Gruppe ausgewählt werden, alle Elemente in der Gruppe ausgewählt werden, und (ii) wenn alle Elemente in Gruppe A ausgewählt werden, alle Elemente in Gruppe B abgewählt werden, und wenn alle Elemente in Gruppe A abgewählt werden, alle Elemente in Gruppe B ausgewählt werden;
Durchführen einer Quantifizierung einer Hyperlokalisierung von (a) jedem bemerkenswerten Element aus den bemerkenswerten Elementen, (b) jeder Kategorie aus der Mehrzahl von Kategorien, (c) jedem Geschäft aus einer Mehrzahl von Geschäften, die ein oder mehrere der Mehrzahl von Elementen für eine oder mehrere der Mehrzahl von Kategorien speichern, und (d) jedem Geschäftscluster aus einer Mehrzahl von Geschäftsclustern für eine oder mehrere der Mehrzahl von Kategorien, die durch die Mehrzahl von Geschäften gebildet werden;
Aktualisieren einer zentralen Datenbank mit (a) dem identifizierten Satz von Verkaufsmustern und dem Wichtigkeitsmaß jedes Verkaufsmusters und dem identifizierten Satz von bemerkenswerten Elementen unter jedem Verkaufsmuster, (b) dem identifizierten Satz von lokalisierten komplementären bemerkenswerten Elementen und dem identifizierten Satz von lokalisierten konkurrierenden bemerkenswerten Elementen, und (c) dem quantifizierten Maß der Hyperlokalisierung jedes bemerkenswerten Elements, jeder Kategorie, jedes Geschäfts und jedes Geschäftsclusters; und
Ermöglichen einer Integration einer Mehrzahl von Anwendungen, die mit der zentralen Datenbank verknüpft sind, um Operationen zu optimieren, die mit einer Hyperlokalisierung über eine Wertschöpfungskette hinweg assoziiert sind, wobei die Mehrzahl von Anwendungen Beschaffung, Transport, Logistik, Lagerung, Verpackung, Verkauf in Ziegel- und Mörtelgeschäften, Online-Verkauf, Anzeige und Werbung betrifft.

14. Ein oder mehrere nichtflüchtige maschinenlesbare Informationsspeichermedien nach Anspruch 13, wobei die Quantifizierung einer Hyperlokalisierung für jedes bemerkenswerte Element unter Berücksichtigung der Wichtigkeitsgröße jedes der bemerkenswerten Elemente und der Wichtigkeitsgröße für ein entsprechendes bemerkenswertes Verkaufsmuster aus der Mehrzahl von bemerkenswerten Verkaufsmustern durchgeführt wird.

15. Ein oder mehrere nichtflüchtige maschinenlesbare Informationsspeichermedien nach Anspruch 13, wobei die Quantifizierung einer Hyperlokalisierung für jede Kategorie basierend auf einer Summe der Wichtigkeitsgröße jedes bemerkenswerten Verkaufsmusters für jede Kategorie durchgeführt wird und wobei die Quantifizierung einer Hyperlokalisierung für jedes Geschäft basierend auf einem gewichteten multivariaten Abstand zwischen einem bemerkenswerten lokalen Faktormuster eines Geschäfts und einem Schwerpunkt der Bevölkerung durchgeführt wird, wobei der Schwerpunkt der Bevölkerung von bemerkenswerten lokalen Faktormustern aller Geschäfte der Bevölkerung abgeleitet ist, und die Quantifizierung einer Hyperlokalisierung für jedes Geschäftscluster basierend auf einem gewichteten multivariaten Abstand zwischen einem Schwerpunkt der Bevölkerung und einem Schwerpunkt des Clusters durchgeführt wird, wobei der Schwerpunkt der Bevölkerung von der Mehrzahl von bemerkenswerten lokalen Faktormustern aller Geschäfte der Bevölkerung abgeleitet ist und der Schwerpunkt des Clusters von der Mehrzahl von bemerkenswerten lokalen Faktormustern aller Geschäfte des Clusters abgeleitet ist und das Gewicht von der Wichtigkeitsgröße jedes der bemerkenswerten Faktormuster abgeleitet ist.

## Revendications

1. Procédé mis en oeuvre par processeur (200), le procédé comprenant les étapes ci-dessous consistant à :
obtenir (202), par le biais d'un ou plusieurs processeurs matériels, (a) des ventes individuelles pour chaque article parmi une pluralité d'articles pour une catégorie parmi une pluralité de catégories au niveau d'un code postal à partir de données de marché pour une période prédéfinie, et (b) une pluralité de facteurs locaux associés à la catégorie au niveau du code postal ;
positionner (204), par le biais dudit un ou desdits plusieurs processeurs matériels, (a) les ventes individuelles pour chaque article dans un format en colonnes pour permettre de dériver une relation dans l'ensemble de la pluralité d'articles au sein de la catégorie et, (b) chacun de la pluralité de facteurs locaux dans le format en colonnes pour permettre la relation dans l'ensemble de la pluralité de facteurs locaux ;
identifier (206), par le biais dudit un ou desdits plusieurs processeurs matériels, (a) un ensemble de modèles de ventes à partir de combinaisons linéaires de ventes individuelles de chaque article de la pluralité d'articles, et (b) un ensemble de modèles de facteurs locaux à partir de combinaisons linéaires de chaque facteur local de la pluralité de facteurs locaux, en maximisant la relation entre l'ensemble de modèles de ventes et l'ensemble de modèles de facteurs locaux en appliquant une analyse canonique entre les ventes individuelles de chaque article dans un format en colonnes et la pluralité de facteurs locaux dans un format en colonnes ;
déterminer (208), par le biais dudit un ou desdits plusieurs processeurs matériels, (a) une pluralité de modèles de ventes notables parmi la pluralité de modèles de ventes, et une pluralité de modèles de facteurs locaux notables parmi la pluralité de modèles de facteurs locaux, sur la base d'un critère de lambda de Wilks fourni par l'analyse canonique, et (b) une grandeur d'importance de chaque modèle de ventes notable et une grandeur d'importance de chaque modèle de facteur local notable, sur la base d'une contribution à la variance du modèle de ventes notable correspondant et du modèle de facteur local notable respectivement fournis par l'analyse canonique ;
déterminer (210), par le biais dudit un ou desdits plusieurs processeurs matériels, a) un ensemble d'articles notables pour chaque modèle de ventes notable, parmi la pluralité d'articles, sur la base d'un paramètre de signification fourni par l'analyse canonique, et b) une grandeur d'importance de chaque article notable parmi l'ensemble d'articles notables pour chacun des modèles de ventes notables, dans laquelle la grandeur d'importance de chaque article notable est mesurée à l'aide des poids canoniques fournis par l'analyse canonique ;
identifier (212), par le biais dudit un ou desdits plusieurs processeurs matériels, un ensemble d'articles notables complémentaires localisés et un ensemble d'articles notables concurrentiels localisés parmi l'ensemble d'articles notables pour chacun des modèles de ventes notables, sur la base de la direction de la grandeur d'importance, dans lequel (a) l'ensemble d'articles notables complémentaires localisés pour un modèle de ventes notable correspondant est identifié à partir d'une grandeur d'importance positive de l'ensemble d'articles notables, et (b) l'ensemble d'articles notables concurrentiels localisés pour le modèle de ventes notable correspondant est identifié sur la base d'une grandeur d'importance négative de l'ensemble d'articles notables ;
mettre en oeuvre (214), par le biais dudit un ou desdits plusieurs processeurs matériels, l'automatisation d'une pluralité de règles pour un outil d'assortiment, sur la base de (a) l'ensemble identifié d'articles notables complémentaires localisés, pour un modèle de ventes notable, qui sont étiquetés en tant que groupe A, et (b) l'ensemble identifié d'articles notables concurrentiels localisés, pour le modèle de ventes notable, qui sont étiquetés en tant que groupe B, et dans lequel l'outil d'assortiment est activé pour garantir que (i) si un ou plusieurs articles sont sélectionnés dans un groupe, alors tous les articles du groupe sont sélectionnés, et (ii) si tous les articles du groupe A sont sélectionnés, alors tous les articles du groupe B sont désélectionnés, et si tous les articles du groupe A sont désélectionnés, alors tous les articles du groupe B sont sélectionnés ;
mettre en oeuvre (216), par le biais dudit un ou desdits plusieurs processeurs matériels, une quantification d'hyperlocalisation de (a) chaque article notable parmi les articles notables, (b) chaque catégorie parmi la pluralité de catégories, (c) chaque magasin parmi une pluralité de magasins stockant un ou plusieurs articles de la pluralité d'articles pour une ou plusieurs catégories de la pluralité de catégories, et (d) chaque groupe de magasins parmi une pluralité de groupes de magasins pour une ou plusieurs catégories de la pluralité de catégories formées par la pluralité de magasins ;
mettre à jour (218), par le biais dudit un ou desdits plusieurs processeurs matériels, une base de données centrale avec (a) l'ensemble identifié de modèles de ventes et la mesure d'importance de chaque modèle de ventes et l'ensemble identifié d'articles notables en vertu de chaque modèle de ventes, (b) l'ensemble identifié d'articles notables complémentaires localisés et l'ensemble identifié d'articles notables concurrentiels localisés, et (c) la mesure d'hyperlocalisation quantifiée de chaque article notable, chaque catégorie, chaque magasin et chaque groupe de magasins ; et
permettre (220), par le biais dudit un ou desdits plusieurs processeurs matériels, l'intégration d'une pluralité d'applications qui sont liées à la base de données centrale afin d'optimiser des opérations associées à l'hyperlocalisation dans l'ensemble de la chaîne de valeur, dans laquelle la pluralité d'applications concerne l'approvisionnement, le transport, la logistique, le stockage, le conditionnement, les ventes dans des magasins physiques, les ventes en ligne, la présentation et la publicité.

2. Procédé selon la revendication 1, dans lequel la quantification d'hyperlocalisation pour chaque article notable est mise en oeuvre en tenant compte de la grandeur d'importance de chacun des articles notables et de la grandeur d'importance pour un modèle de ventes notable correspondant parmi la pluralité de modèles de ventes notables.

3. Procédé selon la revendication 1, dans lequel la quantification d'hyperlocalisation pour chaque catégorie est mise en oeuvre sur la base de la somme de la grandeur d'importance de chaque modèle de ventes notable pour chaque catégorie.

4. Procédé selon la revendication 1, dans lequel la quantification d'hyperlocalisation pour chaque magasin est mise en oeuvre sur la base d'une distance multivariée pondérée entre un modèle de facteur local notable d'un magasin et un centroïde de population, dans lequel le centroïde de population est dérivé de modèles de facteurs locaux notables de tous les magasins de la population, et la quantification d'hyperlocalisation pour chaque groupe de magasins est mise en oeuvre sur la base d'une distance multivariée pondérée entre un centroïde de population et un centroïde de groupe, dans lequel le centroïde de population est dérivé de la pluralité de modèles de facteurs locaux notables de tous les magasins de la population et le centroïde de groupe est dérivé de la pluralité de modèles de facteurs locaux notables de tous les magasins du groupe, et un poids est dérivé de la grandeur d'importance de chacun des modèles de facteurs locaux notables.

5. Procédé selon la revendication 1, dans lequel une priorité de présentation d'articles dans un rayonnage pour un magasin est décidée sur la base d'un ordre de grandeur d'importance d'un modèle de ventes correspondant parmi une pluralité d'ensembles de modèles de ventes pour une catégorie.

6. Procédé selon la revendication 1, dans lequel des ventes perdues sous l'effet d'articles manquants dans l'assortiment historique sont capturées et un potentiel de magasins est pris en compte pour des stratégies d'hyperlocalisation en appliquant des données de marché en vue d'obtenir des ventes d'articles individuels.

7. Système (100), comprenant :
une mémoire (102) stockant des instructions ;
une ou plusieurs interfaces d'entrée/sortie (I/O) (106) ; et
un ou plusieurs processeurs matériels (104) couplés à la mémoire (102) par l'intermédiaire de ladite une ou desdites plusieurs interfaces d'entrée/sortie (106),
un outil d'assortiment, et une base de données centrale liée à une pluralité d'applications,
dans lequel ledit un ou lesdits plusieurs processeurs matériels (104) sont configurés, par les instructions, de manière à :
obtenir (a) des ventes individuelles pour chaque article parmi une pluralité d'articles pour une catégorie parmi une pluralité de catégories au niveau d'un code postal à partir de données de marché pour une période prédéfinie, et (b) une pluralité de facteurs locaux associés à la catégorie au niveau du code postal ;
positionner (a) les ventes individuelles pour chaque article dans un format en colonnes pour permettre de dériver une relation dans l'ensemble de la pluralité d'articles au sein de la catégorie et, (b) chacun de la pluralité de facteurs locaux dans le format en colonnes pour permettre la relation dans l'ensemble de la pluralité de facteurs locaux ;
identifier (a) un ensemble de modèles de ventes à partir de combinaisons linéaires de ventes individuelles de chaque article de la pluralité d'articles, et (b) un ensemble de modèles de facteurs locaux à partir de combinaisons linéaires de chaque facteur local de la pluralité de facteurs locaux, en maximisant la relation entre l'ensemble de modèles de ventes et l'ensemble de modèles de facteurs locaux en appliquant une analyse canonique entre les ventes individuelles de chaque article dans un format en colonnes et la pluralité de facteurs locaux dans un format en colonnes ;
déterminer (a) une pluralité de modèles de ventes notables parmi la pluralité de modèles de ventes, et une pluralité de modèles de facteurs locaux notables parmi la pluralité de modèles de facteurs locaux, sur la base d'un critère de lambda de Wilks fourni par l'analyse canonique, et (b) une grandeur d'importance de chaque modèle de ventes notable et une grandeur d'importance de chaque modèle de facteur local notable, sur la base d'une contribution à la variance du modèle de ventes notable correspondant et du modèle de facteur local notable fournis par l'analyse canonique ;
déterminer a) un ensemble d'articles notables pour chaque modèle de ventes notable, parmi la pluralité d'articles, sur la base d'un paramètre de signification fourni par l'analyse canonique, et b) une grandeur d'importance de chaque article notable parmi l'ensemble d'articles notables pour chacun des modèles de ventes notables, dans laquelle la grandeur d'importance de chaque article notable est mesurée à l'aide des poids canoniques fournis par l'analyse canonique ;
identifier un ensemble d'articles notables complémentaires localisés et un ensemble d'articles notables concurrentiels localisés parmi l'ensemble d'articles notables pour chacun des modèles de ventes notables, sur la base de la direction de la grandeur d'importance, dans lequel (a) l'ensemble d'articles notables complémentaires localisés pour un modèle de ventes notable correspondant est identifié à partir d'une grandeur d'importance positive de l'ensemble d'articles notables, et (b) l'ensemble d'articles notables concurrentiels localisés pour le modèle de ventes notable correspondant est identifié sur la base d'une grandeur d'importance négative de l'ensemble d'articles notables ;
mettre en oeuvre l'automatisation d'une pluralité de règles pour un outil d'assortiment, sur la base de (a) l'ensemble identifié d'articles notables complémentaires localisés, pour un modèle de ventes notable, qui sont étiquetés en tant que groupe A, et (b) l'ensemble identifié d'articles notables concurrentiels localisés, pour le modèle de ventes notable, qui sont étiquetés en tant que groupe B, et dans lequel l'outil d'assortiment est activé pour garantir que (i) si un ou plusieurs articles sont sélectionnés dans un groupe, alors tous les articles du groupe sont sélectionnés, et (ii) si tous les articles du groupe A sont sélectionnés, alors tous les articles du groupe B sont désélectionnés, et si tous les articles du groupe A sont désélectionnés, alors tous les articles du groupe B sont sélectionnés ;
mettre en oeuvre une quantification d'hyperlocalisation de (a) chaque article notable parmi les articles notables, (b) chaque catégorie parmi la pluralité de catégories, (c) chaque magasin parmi une pluralité de magasins stockant un ou plusieurs articles de la pluralité d'articles pour une ou plusieurs catégories de la pluralité de catégories, et (d) chaque groupe de magasins parmi une pluralité de groupes de magasins pour une ou plusieurs catégories de la pluralité de catégories formées par la pluralité de magasins ;
mettre à jour la base de données centrale avec (a) l'ensemble identifié de modèles de ventes et la mesure d'importance de chaque modèle de ventes et l'ensemble identifié d'articles notables en vertu de chaque modèle de ventes, (b) l'ensemble identifié d'articles notables complémentaires localisés et l'ensemble identifié d'articles notables concurrentiels localisés, et (c) la mesure d'hyperlocalisation quantifiée de chaque article notable, chaque catégorie, chaque magasin et chaque groupe de magasins ; et
permettre l'intégration de la pluralité d'applications qui sont liées à la base de données centrale afin d'optimiser des opérations associées à l'hyperlocalisation dans l'ensemble de la chaîne de valeur, dans laquelle la pluralité d'applications concerne l'approvisionnement, le transport, la logistique, le stockage, le conditionnement, les magasins physiques, les ventes en ligne, la présentation et la publicité.

8. Système (100) selon la revendication 7, dans lequel ledit un ou lesdits plusieurs processeurs matériels (104) sont configurés de manière à mettre en oeuvre la quantification d'hyperlocalisation pour chaque article notable en tenant compte de la grandeur d'importance de chacun des articles notables et de la grandeur d'importance pour un modèle de ventes notable correspondant parmi la pluralité de modèles de ventes notables.

9. Système (100) selon la revendication 7, dans lequel ledit un ou lesdits plusieurs processeurs matériels (104) sont configurés de manière à mettre en oeuvre la quantification d'hyperlocalisation pour chaque catégorie sur la base de la somme de la grandeur d'importance de chaque modèle de ventes notable pour chaque catégorie.

10. Système (100) selon la revendication 7, dans lequel ledit un ou lesdits plusieurs processeurs matériels (104) sont configurés de manière à mettre en oeuvre la quantification d'hyperlocalisation pour chaque magasin sur la base d'une distance multivariée pondérée entre un modèle de facteur local notable d'un magasin et un centroïde de population, dans lequel le centroïde de population est dérivé de modèles de facteurs locaux notables de tous les magasins de la population, et la quantification d'hyperlocalisation pour chaque groupe de magasins est mise en oeuvre sur la base d'une distance multivariée pondérée entre un centroïde de population et un centroïde de groupe, dans lequel le centroïde de population est dérivé de la pluralité de modèles de facteurs locaux notables de tous les magasins de la population et le centroïde de groupe est dérivé de modèles de facteurs locaux notables de tous les magasins du groupe, et un poids est dérivé de la grandeur d'importance de chacun des modèles de facteurs locaux notables.

11. Système (100) selon la revendication 7, dans lequel ledit un ou lesdits plusieurs processeurs matériels (104) sont configurés de manière à décider une priorité de présentation d'articles dans un rayonnage pour un magasin sur la base d'un ordre de grandeur d'importance d'un modèle de ventes correspondant parmi une pluralité d'ensembles de modèles de ventes pour une catégorie.

12. Système (100) selon la revendication 7, dans lequel ledit un ou lesdits plusieurs processeurs matériels (104) sont configurés de manière à capturer des ventes perdues sous l'effet d'articles manquants dans l'assortiment historique et un potentiel de magasins est pris en compte pour des stratégies d'hyperlocalisation en appliquant des données de marché en vue d'obtenir des ventes d'articles individuels.

13. Un ou plusieurs supports de stockage non transitoires d'informations lisibles par machine comprenant une ou plusieurs instructions qui, lorsqu'elles sont exécutées par un ou plusieurs processeurs matériels, occasionnent la mise en oeuvre des étapes ci-dessous consistant à :
obtenir (a) des ventes individuelles pour chaque article parmi une pluralité d'articles pour une catégorie parmi une pluralité de catégories au niveau d'un code postal à partir de données de marché pour une période prédéfinie, et (b) une pluralité de facteurs locaux associés à la catégorie au niveau du code postal ;
positionner (a) les ventes individuelles pour chaque article dans un format en colonnes pour permettre de dériver une relation dans l'ensemble de la pluralité d'articles au sein de la catégorie et, (b) chacun de la pluralité de facteurs locaux dans le format en colonnes pour permettre la relation dans l'ensemble de la pluralité de facteurs locaux ;
identifier (a) un ensemble de modèles de ventes à partir de combinaisons linéaires de ventes individuelles de chaque article de la pluralité d'articles, et (b) un ensemble de modèles de facteurs locaux à partir de combinaisons linéaires de chaque facteur local de la pluralité de facteurs locaux, en maximisant la relation entre l'ensemble de modèles de ventes et l'ensemble de modèles de facteurs locaux en appliquant une analyse canonique entre les ventes individuelles de chaque article dans un format en colonnes et la pluralité de facteurs locaux dans un format en colonnes ;
déterminer (a) une pluralité de modèles de ventes notables parmi la pluralité de modèles de ventes, et une pluralité de modèles de facteurs locaux notables parmi la pluralité de modèles de facteurs locaux, sur la base d'un critère de lambda de Wilks fourni par l'analyse canonique, et (b) une grandeur d'importance de chaque modèle de ventes notable et une grandeur d'importance de chaque modèle de facteur local notable, sur la base d'une contribution à la variance du modèle de ventes notable correspondant et du modèle de facteur local notable respectivement fournis par l'analyse canonique ;
déterminer a) un ensemble d'articles notables pour chaque modèle de ventes notable, parmi la pluralité d'articles, sur la base d'un paramètre de signification fourni par l'analyse canonique, et b) une grandeur d'importance de chaque article notable parmi l'ensemble d'articles notables pour chacun des modèles de ventes notables, dans laquelle la grandeur d'importance de chaque article notable est mesurée à l'aide des poids canoniques fournis par l'analyse canonique ;
identifier un ensemble d'articles notables complémentaires localisés et un ensemble d'articles notables concurrentiels localisés parmi l'ensemble d'articles notables pour chacun des modèles de ventes notables, sur la base de la direction de la grandeur d'importance, dans lequel (a) l'ensemble d'articles notables complémentaires localisés pour un modèle de ventes notable correspondant est identifié à partir d'une grandeur d'importance positive de l'ensemble d'articles notables, et (b) l'ensemble d'articles notables concurrentiels localisés pour le modèle de ventes notable correspondant est identifié sur la base d'une grandeur d'importance négative de l'ensemble d'articles notables ;
mettre en oeuvre l'automatisation d'une pluralité de règles pour un outil d'assortiment, sur la base de (a) l'ensemble identifié d'articles notables complémentaires localisés, pour un modèle de ventes notable, qui sont étiquetés en tant que groupe A, et (b) l'ensemble identifié d'articles notables concurrentiels localisés, pour le modèle de ventes notable, qui sont étiquetés en tant que groupe B, et dans lequel l'outil d'assortiment est activé pour garantir que (i) si un ou plusieurs articles sont sélectionnés dans un groupe, alors tous les articles du groupe sont sélectionnés, et (ii) si tous les articles du groupe A sont sélectionnés, alors tous les articles du groupe B sont désélectionnés, et si tous les articles du groupe A sont désélectionnés, alors tous les articles du groupe B sont sélectionnés ;
mettre en oeuvre une quantification d'hyperlocalisation de (a) chaque article notable parmi les articles notables, (b) chaque catégorie parmi la pluralité de catégories, (c) chaque magasin parmi une pluralité de magasins stockant un ou plusieurs articles de la pluralité d'articles pour une ou plusieurs catégories de la pluralité de catégories, et (d) chaque groupe de magasins parmi une pluralité de groupes de magasins pour une ou plusieurs catégories de la pluralité de catégories formées par la pluralité de magasins ;
mettre à jour la base de données centrale avec (a) l'ensemble identifié de modèles de ventes et la mesure d'importance de chaque modèle de ventes et l'ensemble identifié d'articles notables en vertu de chaque modèle de ventes, (b) l'ensemble identifié d'articles notables complémentaires localisés et l'ensemble identifié d'articles notables concurrentiels localisés, et (c) la mesure d'hyperlocalisation quantifiée de chaque article notable, chaque catégorie, chaque magasin et chaque groupe de magasins ; et
permettre l'intégration de la pluralité d'applications qui sont liées à la base de données centrale afin d'optimiser des opérations associées à l'hyperlocalisation dans l'ensemble de la chaîne de valeur, dans laquelle la pluralité d'applications concerne l'approvisionnement, le transport, la logistique, le stockage, le conditionnement, les ventes dans des magasins physiques, les ventes en ligne, la présentation et la publicité.

14. Un ou plusieurs supports de stockage non transitoires d'informations lisibles par machine selon la revendication 13, dans lesquels la quantification d'hyperlocalisation pour chaque article notable est mise en oeuvre en tenant compte de la grandeur d'importance de chacun des articles notables et de la grandeur d'importance d'un modèle de ventes notable correspondant parmi la pluralité de modèles de ventes notables.

15. Un ou plusieurs supports de stockage non transitoires d'informations lisibles par machine selon la revendication 13, dans lesquels la quantification d'hyperlocalisation pour chaque catégorie est mise en oeuvre sur la base d'une somme de la grandeur d'importance de chaque modèle de ventes notable pour chaque catégorie, et dans lesquels la quantification d'hyperlocalisation pour chaque magasin est mise en oeuvre sur la base d'une distance multivariée pondérée entre un modèle de facteur local notable d'un magasin et un centroïde de population, dans lequel le centroïde de population est dérivé de modèles de facteurs locaux notables de tous les magasins de la population, et la quantification d'hyperlocalisation pour chaque groupe de magasins est mise en oeuvre sur la base d'une distance multivariée pondérée entre un centroïde de population et un centroïde de groupe, dans lequel le centroïde de population est dérivé de la pluralité de modèles de facteurs locaux notables de tous les magasins de la population et le centroïde de groupe est dérivé de la pluralité de modèles de facteurs locaux notables de tous les magasins du groupe, et un poids est dérivé de la grandeur d'importance de chacun des modèles de facteurs locaux notables.
